(19) Europäisches Patentamt / European Patent Office / Office européen des brevets

(11) **EP 4 733 287 A1**

(12) **EUROPEAN PATENT APPLICATION**

(43) Date of publication:
**29.04.2026 Bulletin 2026/18**

(21) Application number: **25210693.5**

(22) Date of filing: **23.10.2025**

(51) International Patent Classification (IPC):
**C04B 35/117** $^{(2006.01)}$  **C04B 35/653** $^{(2006.01)}$
**C04B 35/111** $^{(2006.01)}$

(52) Cooperative Patent Classification (CPC):
**C04B 35/653; C04B 35/111; C04B 35/117;**
C04B 2235/3201; C04B 2235/3203;
C04B 2235/3206; C04B 2235/3208;
C04B 2235/3217; C04B 2235/3222;
C04B 2235/3225; C04B 2235/3232;
C04B 2235/3244; C04B 2235/3246;
C04B 2235/3418; C04B 2235/5427; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.10.2024 JP 2024187536**
**06.03.2025 JP 2025035237**

(71) Applicant: **Canon Kabushiki Kaisha**
**Tokyo, 146-8501 (JP)**

(72) Inventor: **YOSHIOKA, Takuya**
**Tokyo (JP)**

(74) Representative: **WESER & Kollegen**
**Patentanwälte PartmbB**
**Radeckestraße 43**
**81245 München (DE)**

(54) **POWDER FOR CERAMIC SHAPING, METHOD OF MANUFACTURING CERAMIC SHAPED OBJECT, CERAMIC STRUCTURAL BODY, AND EQUIPMENT**

(57) To provide a technology advantageous in manufacturing a ceramic structural body (110), which has high mechanical strength and chemical resistance, and has a crack-healing property, using an additive manufacturing method, there is provided a powder (101) for ceramic shaping including one or more kinds of oxide particles, wherein the powder contains at least Al, Y, and Si, and wherein the powder has an element ratio Y/Si of Y to Si that satisfies $25/75 \leq Y/Si \leq 95/5$.

FIG. 4A

**(Cont. next page)**

(52) Cooperative Patent Classification (CPC): (Cont.)
C04B 2235/5436; C04B 2235/6026;
C04B 2235/616; C04B 2235/665; C04B 2235/764;
C04B 2235/768; C04B 2235/77; C04B 2235/80;
C04B 2235/96

**Description**

TECHNICAL FIELD

The present disclosure relates to a powder for ceramic shaping suitably used in an additive manufacturing method involving forming a shaped object by an additive manufacturing technology and a method of manufacturing a ceramic shaped object using the powder, and a ceramic structural body.

BACKGROUND

In recent years, in applications, such as prototyping in a short time period and small-lot production, an additive manufacturing technology involving obtaining a desired structural body by adding a material based on three-dimensional data on a model to be manufactured has been gaining more widespread use. In the manufacture of an article made of metal, a direct manufacturing system in which a metal powder is solidified and shaped by irradiating the powder with laser light based on three-dimensional data on a model has been widely adopted. According to this method, an elaborate and diverse article can be obtained by effectively melting and solidifying the metal powder.

In Japanese Patent Laid-Open No. 2019-19051, excellent shaping accuracy is achieved by adding as an absorber, to a powder of $Al_2O_3$, a rare earth oxide having a higher absorbing ability for light at a wavelength in infrared laser light than that of $Al_2O_3$, to suppress the diffusion of light. In Japanese Patent Laid-Open No. 2023-72682, the cost of a powder serving as a raw material is reduced by using SiO as an absorber.

In the shaped object disclosed in Japanese Patent Laid-Open No. 2019-19051, fine cracks that occur at the time of shaping need to be healed by impregnation. However, in healing by impregnation, particularly in a shaped object having a complex shape, an impregnating liquid is not uniformly distributed, and a region that cannot be sufficiently healed or non-uniformity of the composition occurs. Accordingly, a problem, such as a reduction in strength or breakage, may occur.

The shaped object disclosed in Japanese Patent Laid-Open No. 2023-72682 contains a large amount of a silica component, and there is room for improvement in mechanical characteristics and chemical resistance.

SUMMARY

In view of the foregoing, the present disclosure is directed to the provision of a technology advantageous in manufacturing a ceramic structural body, which has high mechanical strength and chemical resistance, and has a crack-healing property, using an additive manufacturing method.

In order to solve the above-mentioned problem, a first aspect is a powder for ceramic shaping including one or more kinds of oxide particles, wherein the powder contains at least Al, Y, and Si, and wherein the powder has an element ratio Y/Si of Y to Si that satisfies $25/75 \leq Y/Si \leq 95/5$.

A second aspect is a method of manufacturing a ceramic shaped object including heating, with light, a material using a powder for ceramic shaping, which contains at least Al, Y, and Si, and has an element ratio Y/Si of Y to Si that satisfies $25/75 \leq Y/Si \leq 95/5$, to shape a shaped object, wherein the at least one kind of oxide particles are melted through the heating.

In addition, a third aspect is a ceramic structural body including Al, Y, and Si, wherein the ceramic structural body has an element ratio Y/Si of Y to Si that satisfies $25/75 \leq Y/Si \leq 95/5$.

In addition, an application example includes equipment including: the above-mentioned ceramic shaped object; and at least any one of an electric component, an optical component, a metal component, or a resin component.

According to the present disclosure, a technology advantageous in manufacturing a ceramic structural body, which has high mechanical strength and chemical resistance, and has a crack-healing property, using an additive manufacturing method can be provided.

Features of the present disclosure will become apparent from the following description of embodiments with reference to the attached drawings. The following description of embodiments is described by way of example.

BRIEF DESCRIPTION OF THE DRAWINGS

Fig. 1A is a schematic sectional view for schematically illustrating part of steps in one embodiment of a method of manufacturing a shaped object by a powder bed fusion system.
Fig. 1B is a schematic sectional view for schematically illustrating part of the steps in one embodiment of the method of manufacturing a shaped object by the powder bed fusion system.
Fig. 1C is a schematic sectional view for schematically illustrating part of the steps in one embodiment of the method of manufacturing a shaped object by the powder bed fusion system.
Fig. 1D is a schematic sectional view for schematically illustrating part of the steps in one embodiment of the method of manufacturing a shaped object by the powder bed fusion system.
Fig. 1E is a schematic sectional view for schematically illustrating part of the steps in one embodiment of the method of manufacturing a shaped object by the powder bed fusion system.
Fig. 1F is a schematic sectional view for schematically illustrating part of the steps in one embodiment of the method of manufacturing a shaped object by the powder bed fusion system.

Fig. 1G is a schematic sectional view for schematically illustrating part of the steps in one embodiment of the method of manufacturing a shaped object by the powder bed fusion system.

Fig. 1H is a schematic sectional view for schematically illustrating part of the steps in one embodiment of the method of manufacturing a shaped object by the powder bed fusion system.

Fig. 2 is a schematic sectional view for schematically illustrating one embodiment of a method of manufacturing a shaped object by a cladding system.

Fig. 3A is a table for showing compositions of powders for shaping of Examples and Comparative Examples in terms of molar fraction.

Fig. 3B is a table for showing compositions of the powders for shaping of Examples and Comparative Examples in terms of mass fraction.

Fig. 3C is a table for showing particle sizes and angles of repose of the powders for shaping of Examples and Comparative Examples.

Fig. 3D-1 and Fig. 3D-2 are tables for showing element ratios between various elements and molar ratios of oxides in the powders for shaping of Examples and Comparative Examples.

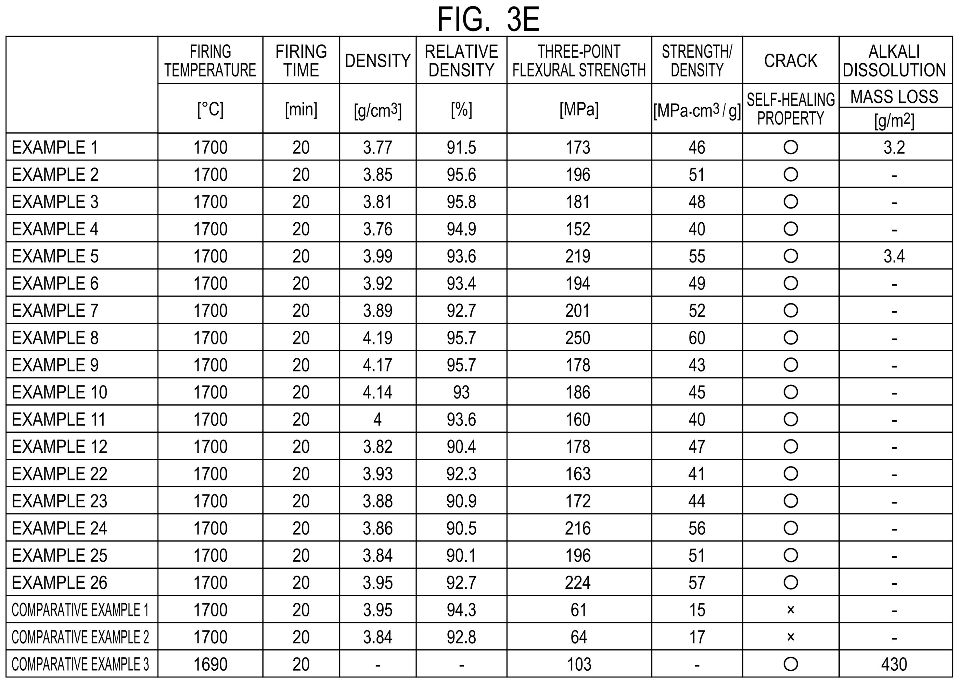

Fig. 3E is a table for showing the results of Examples and Comparative Examples.

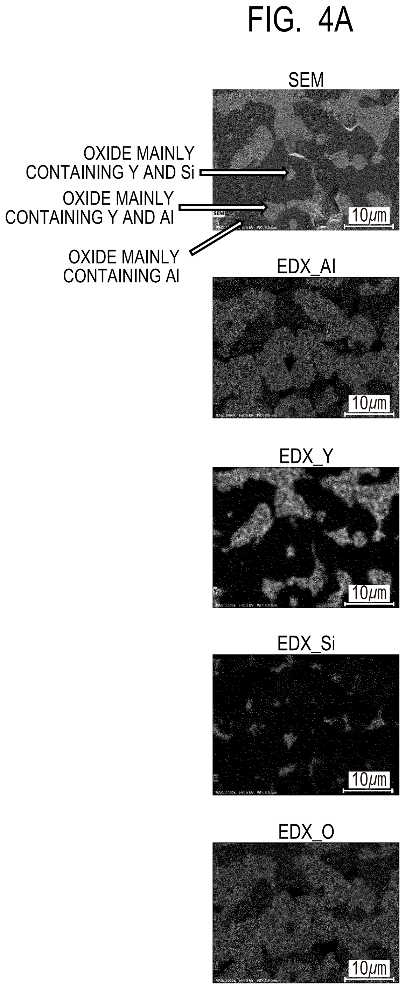

Fig. 4A is a SEM observation image and elemental mapping images of Al, Y, Si, and O according to SEM-EDX evaluations for an example of a plurality of embodiments of the structural body of the present disclosure.

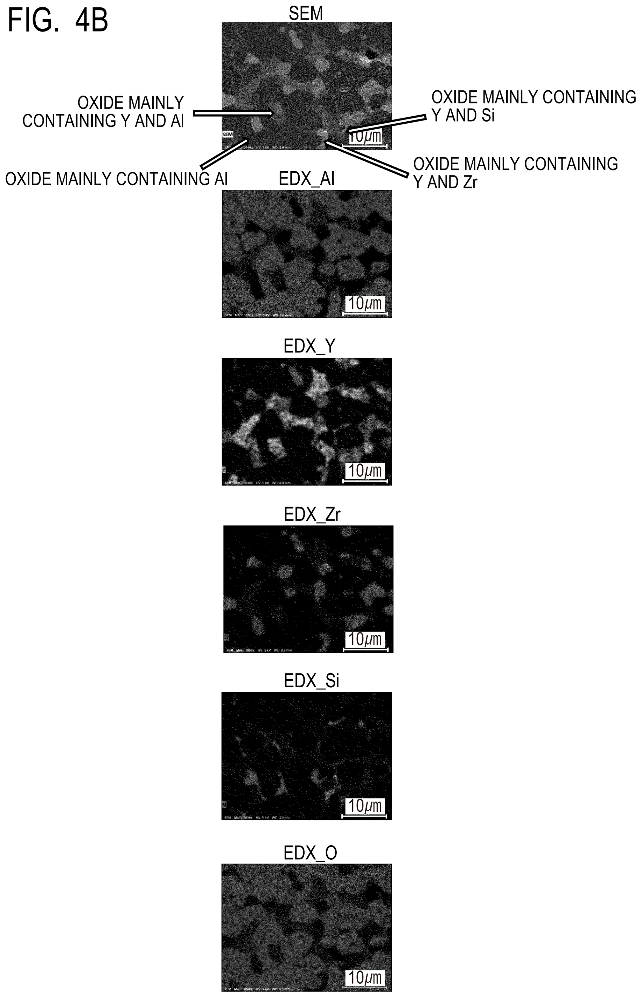

Fig. 4B is a SEM observation image and elemental mapping images of Al, Y, Zr, Si, and O according to SEM-EDX evaluations for an example of a plurality of embodiments of the structural body of the present disclosure.

DESCRIPTION OF THE EMBODIMENTS

Embodiments of the present disclosure are described below with reference to the drawings. However, the present disclosure is by no means limited to the following specific examples or drawings.

As used herein, aluminum oxide is sometimes described as alumina or $Al_2O_3$, yttrium oxide is sometimes described as $Y_2O_3$, silicon monoxide is sometimes described as SiO, silicon dioxide is sometimes described as silica, silicon oxide, or $SiO_2$, and zirconium oxide is sometimes described as zirconia or $ZrO_2$. Each substance may have a plurality of crystal structure states, or may have an amorphous state. In addition, the incorporation of other impurities such as partial incorporation of oxygen or nitrogen is not excluded.

In a unit mass (e.g., 10 g) of a powder of this embodiment, the percentage of the amount (mol) of substance of each compound with respect to the amount (mol) of substance of all compounds is defined as a molar fraction (mol%).

In addition, for example, the term "SiO-containing particles" or "silicon monoxide-containing particles" refers to particles each containing SiO and being independent of one another, and the term "SiO particles" or "silicon monoxide particles" refers to particles formed mainly of SiO and being independent of one another. As used herein, the term "mainly" refers to 50 mol% or more, preferably 75 mol% or more, more preferably 90 mol% or more. The SiO particles and the silicon monoxide particles each contain 50 mol% or more of SiO, preferably 75 mol% or more thereof, more preferably 90 mol% or more thereof. The same applies to $Al_2O_3$ and $Y_2O_3$.

<Powder for Ceramic Shaping>

According to one embodiment of the present disclosure, there is provided a powder for ceramic shaping. The term "powder for ceramic shaping" is hereinafter sometimes referred to as "powder for ceramic shaping" or "powder for shaping."

The powder for shaping of this embodiment is suitably used in a technique called a direct manufacturing system, particularly a powder bed fusion system or an infrared laser melting system.

The powder for shaping (hereinafter also referred to as "material powder," "raw material powder," or simply "powder") of this embodiment includes a plurality of particles independent of one another, is suitably used in an additive manufacturing method involving performing shaping through irradiation with laser light, and includes mainly one or more kinds of oxide particles. Those particles may be classified into a plurality of kinds, or may be formed of a large number of particles having a uniform shape or material.

The powder for shaping of this embodiment contains one or more kinds of oxide particles, and the oxide particles include at least Al, Y, and Si. Further, the powder is characterized by having an element ratio Y/Si of Y to Si that satisfies $25/75 \leq Y/Si \leq 95/5$. With such configuration, in an intermediate shaped object, cracks can be self-healed through heating.

When Y/Si is lower than 25/75, a ceramic structural body (ceramic shaped object) to be obtained cannot sufficiently increase mechanical strength, particularly three-point flexural strength. Y/Si is preferably 25/75 or more because the ceramic structural body (ceramic shaped object) obtained in this embodiment satisfies a mechanical strength, particularly a three-point flexural strength value of 50 MPa or more. The three-point flexural strength value is more preferably 100 MPa or more, still more preferably 150 MPa or more, extremely preferably 170 MPa or more. The three-point flexural strength value may also be set to 200 MPa or more. The three-point flexural strength value may be 1,000 MPa or less, 500 MPa or less, or 400 MPa or less. Further, when Y/Si is too low, the ceramic structural body to be obtained cannot sufficiently increase its chemical resistance, particularly its alkali resistance. Y/Si is preferably 25/75 or more in order to set the mass change per unit area of the ceramic structural body to be obtained to 100 $g/m^2$ or less. The mass change per unit area of the ceramic structural body to be obtained is more preferably 50 $g/m^2$ or less, still more preferably 10 $g/m^2$ or less, still further more preferably 5 $g/m^2$ or less. The alkali resistance of the ceramic structural body to be obtained may be measured in conformity with, for example, JIS R1614.

In addition, the ceramic structural body to be obtained has a density of preferably 4.00 $g/cm^3$ or less. When the ceramic structural body has a density of 4.00 $g/cm^3$, it can be said that the ceramic structural body is sufficiently light.

In the powder for shaping of this embodiment, Y/Si may satisfy Y/Si$\geq$0.43, may satisfy Y/Si$\geq$0.50, more preferably satisfies Y/Si$\geq$1.0, still more preferably satisfies Y/Si$\geq$2.0. When Y/Si is equal to 2.0, the ratios of $Y_2O_3$ and $SiO_2$ become comparable to each other in terms of oxide.

In addition, when Y/Si is too high, the crack self-healing property of the ceramic structural body to be obtained in this embodiment cannot be sufficiently maintained. It is preferred that Y/Si be 95/5 or less in order to maintain the crack self-healing property of the ceramic structural body, and further, in order to sufficiently obtain a function as a laser light absorber when Si is contained as SiO.

Y/Si preferably satisfies Y/Si$\leq$10.0, more preferably satisfies Y/Si$\leq$9.0, still more preferably satisfies Y/Si$\leq$4.9. Y/Si$\leq$4.0 may be satisfied, or Y/Si$\leq$3.0 may be satisfied.

In addition, the powder for shaping of this embodiment preferably satisfies at least any one of the following conditions, in terms of molar fraction: the content of Al is higher than that of Y; or the content of Al is higher than that of Si.

Si contained in the powder for shaping of this embodiment is preferably contained as an oxide of Si, that is, preferably contained as SiO or $SiO_2$. In addition, Si is preferably contained as oxide particles, that is, preferably contained as silicon oxide particles. The silicon oxide particles include SiO particles (silicon monoxide particles), $SiO_2$ particles (silicon dioxide particles or silicon oxide particles), SiO-containing particles (silicon monoxide-containing particles), $SiO_2$-containing particles (silicon dioxide-containing particles or silicon oxide-containing particles), a mixture of any two of those particles, and a mixture of SiO particles and $SiO_2$ particles.

In addition, Al contained in the powder for shaping according to this embodiment is preferably contained as an oxide of Al, that is, preferably contained as $Al_2O_3$. The powder for shaping preferably contains particles each containing an oxide of Al, more preferably contains $Al_2O_3$-containing particles (aluminum oxide-containing particles), or $Al_2O_3$ particles (aluminum oxide particles) as oxide particles. The particles except the silicon oxide particles each have a particle size of preferably 10 $\mu$m or more and 200 $\mu$m or less, more preferably 10 $\mu$m or more and 50 $\mu$m or less.

The composition of the powder for shaping of this embodiment preferably contains 50 mol% or more of Al in terms of oxide. With this configuration, the mechanical strength and chemical resistance of the ceramic structural body can be further increased. The powder for shaping more preferably contains 60 mol% or more, still more preferably contains 70 mol% or more, still further more preferably contains 80 mol% or more of Al.

Further, the powder for shaping of this embodiment preferably contains Zr, more preferably contains Zr as $ZrO_2$. Further, the powder for shaping preferably contains particles each containing an oxide of Zr, more preferably contains $ZrO_2$-containing particles (zirconium oxide-containing particles) or $ZrO_2$ particles (zirconium oxide particles) as oxide particles.

With this configuration, the mechanical strength of the ceramic structural body can be further increased. The composition of the powder for shaping more preferably includes 3 mol% or more, still more preferably includes 7 mol% or more of Zr in terms of oxide.

The powder for shaping of this embodiment preferably satisfies at least any one of the following conditions, in terms of molar fraction: the content of Al is higher than that of Zr; the content of Y is higher than that of Zr; or the content of Zr is higher than that of Si. However, the molar fraction of Zr may be higher than the molar fraction of Al.

In addition, when the powder for shaping of this embodiment contains Y, Y is preferably contained as $Y_2O_3$. Further, the powder for shaping preferably contains particles each containing an oxide of Y, more preferably contains $Y_2O_3$-containing particles (yttrium oxide-containing particles) or $Y_2O_3$ particles (yttrium oxide particles) as oxide particles.

The indication of a compound, such as $Al_2O_3$, $Y_2O_3$, SiO, or $SiO_2$, does not limit the composition of an indicated stoichiometric ratio, and an error in constituent element ratio of within $\pm$30% from a stoichiometric ratio normalized with a metal element is tolerated. For example, a compound having a constituent element ratio of Si:O=100:130 is also encompassed by the indication of SiO. That is, SiO may be represented as $SiO_m$ (0.7$\leq$m$\leq$1.3).

The powder for shaping of this embodiment contains one or more kinds of oxide particles, preferably contains $Al_2O_3$ particles and silicon oxide particles as the oxide particles. The silicon oxide particles include SiO particles, $SiO_2$ particles, or a mixture of SiO particles and $SiO_2$ particles. Further, the powder for shaping of this embodiment preferably contains $Y_2O_3$ particles. In addition, the powder for shaping of this embodiment preferably contains $ZrO_2$ particles. The $ZrO_2$ particles may each contain Y.

As described above, the powder for shaping of this embodiment may contain particles except the silicon oxide particles. The particles except the silicon oxide particles may be, for example, $Al_2O_3$ particles, $Y_2O_3$ particles, or $ZrO_2$ particles. The average particle size of the particles except the silicon oxide particles may be 5 $\mu$m or more from the viewpoint of achieving preferred fluidity. The average particle size of the oxide particles except the silicon oxide particles is preferably 10 $\mu$m or more and 200 $\mu$m or less. The average particle size of the oxide particles except the silicon oxide particles may be, for example, 20 $\mu$m or more. The average particle size of the oxide particles except the silicon oxide particles may be 100 $\mu$m or less, may be 50 $\mu$m or less, or may be 40 $\mu$m or less. The average particle size of the oxide particles except the silicon oxide particles is preferably 10 $\mu$m or more and 50 $\mu$m or less, more preferably 20 $\mu$m or more and 40 $\mu$m or less.

The powder for shaping of this embodiment preferably contains particles having a high absorbing ability for light (laser light) at a wavelength to be radiated at the time of shaping, particularly preferably contains SiO-containing particles. SiO shows a brown color or a black color, and has a relatively high light-absorbing ability for laser light as compared to $Al_2O_3$ or $Y_2O_3$ contained in the powder for shaping. When SiO absorbs laser light, Si changes its form from divalent to tetravalent, changing from SiO in a metastable state to $SiO_2$ in a more stable state to have a lower light-absorbing ability for laser light. When shaping is performed through use of a powder in which SiO having such characteristic is added as an absorber to $Al_2O_3$ or $Y_2O_3$, the following actions and effects can be obtained.

The first action and effect is that SiO serving as an absorber is increased in temperature by efficiently absorbing laser light to be used at the time of manufacture, and thus transfers heat to any other compound present in a region corresponding to the focal point size of the laser light, to thereby cause a temperature increase. As a result, local heating corresponding to the focal point size of the laser light can be effectively achieved, and an interface between a region in which the powder is to be solidified (region that has been irradiated with the laser light) and a region in which the powder is not to be solidified (region that has not been irradiated with the laser light) can be made distinct to improve shaping accuracy.

The second action and effect is that SiO changes into $SiO_2$ or the like having a low light-absorbing ability through irradiation with laser light, and absorption of light is suppressed in a portion (solidified portion) which has been irradiated with the laser light once and in which the powder has been solidified. In the case where the light-absorbing ability of $SiO_x$ is reduced to 5/6 or less times as high as the light-absorbing ability of SiO before irradiation with laser light, even when the solidified portion is irradiated with laser light under the same conditions as those at the time of its solidification, the portion is not so influenced that the shaping accuracy is reduced.

That is, almost no SiO serving as an absorber is present in the solidified portion. Accordingly, even when the solidified portion is irradiated with laser light, such a temperature increase as in the case before irradiation does not occur. Further, even when the powder adjacent to the solidified portion is irradiated with laser light, deformation and alternation of the solidified portion are suppressed. As a result, a process margin for, for example, laser light irradiation conditions can be increased, and the influence of fluctuation in irradiation conditions on the shaping accuracy can be reduced. In order to obtain sufficient shaping accuracy, the light-absorbing ability of SiO alone before irradiation with laser light is preferably 1.2 or more times, more preferably 2 or more times as high as the light-absorbing ability of the absorber changed in composition after the irradiation with laser lights.

As described above, when shaping is performed by selectively irradiating the powder of the present disclosure with laser light, the above-mentioned first action and effect, and second action and effect are obtained, and thus shaping with high accuracy can be achieved. In addition, SiO is distributed in the market as a negative electrode for a lithium ion secondary battery, and hence can be procured inexpensively as compared to any other compound that can be utilized as an absorber.

However, at least part of SiO may be replaced with $SiO_2$, or when, for example, heating is performed by using an approach except laser light, SiO may be replaced with $SiO_2$. In addition, TiO or the like may be used as the absorber instead of SiO. In such cases, the powder may contain $SiO_2$, and Si for evaluating Y/Si may be derived from $SiO_2$. Alternatively, the powder may contain elemental silicon or a silicon compound except silicon oxide (e.g., silicon nitride, silicon carbide, or a metal silicide), and Si for evaluating Y/Si may be derived from such silicon compound except silicon oxide.

The individual particles contained in the powder for shaping, which are independent of one another, may each be a composite particle such as a sintered product of a plurality of particles (sintered particle), and may be amorphous or crystalline. In this embodiment, a case in which the powder is formed of a plurality of compounds encompasses a case of a mixture of a plurality of kinds of particles each formed of one kind of compound, and a case of one kind, or a mixture of a plurality of kinds, of particles each formed of a plurality of kinds of compounds. For the avoidance of confusion, the particles contained in the powder, which are independent of one another, are hereinafter simply referred to as "particles", and particles for forming the individual particles are hereinafter referred to as "constituent particles." For example, when the $Al_2O_3$ particles and the $Y_2O_3$ particles are sintered to form composite particles, it can be said that the particles include constituent particles of $Al_2O_3$ and constituent particles of $Y_2O_3$. Alternatively, it can be said that the particles each include an $Al_2O_3$ region and an $Y_2O_3$ region.

As an example in which particles for forming the powder for shaping each contain one kind of compound, in the case of a powder for shaping containing Al, Y, and Si as elements, there is given, for example, a state in which the powder for shaping is configured as a mixture of three kinds of particles, that is, $Al_2O_3$ particles, $Y_2O_3$ particles, and SiO particles.

As an example in which particles for forming the powder for shaping each contain a plurality of compounds, there are given, for example, a state in which one particle includes an $Al_2O_3$ region, an $Y_2O_3$ region, and a SiO region, and a state in which particles each formed of an $Al_2O_3$ region and an $Y_2O_3$ region, and particles each formed of SiO are contained.

In a situation where a powder bed layer is formed with a recoater in powder bed fusion, or in a situation where a powder is jetted from a nozzle in a cladding method, it is important that the powder for shaping have fluidity appropriate therefor. Accordingly, the powder for shaping of this embodiment preferably satisfies a fluidity index of 40 [sec/50 g] or less. In order to ensure such fluidity, the particles each preferably have a spherical shape. However, as long as the above-mentioned fluidity index can be satisfied, the shapes of the particles are not limited to spherical shapes. The fluidity index may be measured, for example, in conformity with JIS Z2502. In addition, an angle of repose may be used as the fluidity index. The powder for shaping of this embodiment preferably satisfies an angle of repose of 40° or less. The angle of repose may be measured in conformity with JIS R9301-2-2.

SiO, which functions as an absorber, is preferably contained in the powder for shaping as such SiO-containing particles that 50 mol% or more of the particles are each SiO whatever state the other compound contained therein is in. When 50 mol% or more of the particles are each SiO, even particles each containing SiO and the other compound can function as an absorber.

Further, SiO, which functions as an absorber, is particularly preferably in a state of being contained in the powder for shaping as particles (SiO particles) independent of any other component whatever state the other compound contained therein is in.

SiO can achieve a higher light-absorbing ability in a state in which SiO is contained as SiO particles independent of one another than in a state in which SiO is contained in one particle together with the other compound in the particle. Further, laser light can easily reach the absorber to enable efficient utilization of the light-absorbing ability of the absorber. Besides, when SiO serves as SiO particles independent of the other component, the particle sizes of the SiO particles and the particle sizes of other particles can be separately adjusted. Thus, the fluidity of the powder is easily controlled, and the amount of the absorber present in the spot diameter of the laser light to be radiated is easily controlled. This point is described in detail later.

When the silicon monoxide (SiO)-containing particles are each a SiO particle that is free of a region except silicon monoxide, it is preferred that the average particle size of particles except the silicon oxide particles out of the oxide particles (hereinafter also referred to as "base material particles") be 5 μm or more, and be larger than the average particle size of the SiO particles from the viewpoint of achieving preferred fluidity. The average particle size of the base material particles is more preferably 10 μm or more and 200 μm or less. In addition, the average particle size of the base material particles is preferably 2 or more times, or preferably 3 or more times as large as the average particle size of the SiO particles. In addition, the average particle size of the base material particles is preferably 10 or less times, more preferably 8 or less times as large as the average particle size of the SiO particles. When the average particle size of the SiO particles is less than 5 μm, the average particle size of the base material particles may be 5 or more times as large as the average particle size of the SiO particles. When the average particle size of the SiO particles is 5 μm or more, the average particle size of the base material particles may be 5 or less times as large as the average particle size of the SiO particles. In addition, from the viewpoint of achieving high shaping accuracy, and the viewpoint of facilitating the sintering or melting of the powder, the average particle size of the base material particles is preferably 200 μm or less, more preferably 150 μm or less. From the viewpoint of facilitating the melting of the powder, the average particle size of the base material particles is more preferably 100 μm or less, still more preferably 50 μm or less. The average particle size of the base material particles may be 20 μm or more, or may be 40 μm or less.

When the silicon monoxide (SiO)-containing particles are each a SiO particle that is free of a region except silicon monoxide, it is preferred that the average particle size of the SiO particles be 10 μm or less, and be smaller than the average particle size of the particle sizes of the base material particles. When the SiO particles satisfy such conditions, there is a high probability that a plurality of SiO particles are dispersed and present in the vicinity of the base material particles, and hence heat generated through absorption of laser light by SiO is efficiently transferred to the base material particles to facilitate the melting of the powder in a laser light irradiation portion. In consideration of achievement of the dispersibility and high packing density of SiO in the powder for shaping, the average particle size of the SiO particles is preferably as small as possible. Meanwhile, when the average particle size of the SiO particles is 1 μm or more, scattering of the particles into an atmosphere through irradiation with laser light is suppressed, and hence a suitable amount thereof as the absorber can be maintained in the powder for shaping. Accordingly, the average particle size of the SiO particles is preferably 0.05 μm or more and 10 μm or less, more preferably 0.1 μm or more and 10 μm or less, still more preferably 0.5 μm or more and 10 μm or less, still further more preferably 1 μm

or more and 10 $\mu$m or less. The average particle size of the SiO particles is preferably 1/2 or less, or preferably 1/3 or less of the average particle size of the particle sizes of the base material particles. The average particle size of the SiO particles is preferably 1/10 or more, more preferably 1/8 or more of the average particle size of the particle sizes of the base material particles. When the average particle size of the SiO particles is 1 $\mu$m or more and less than 5 $\mu$m, the average particle size of the SiO particles is more preferably 1/5 or less of the average particle size of the particle sizes of the base material particles. When the average particle size of the SiO particles is 5 $\mu$m or more and 10 $\mu$m or less, the average particle size of the SiO particles may be 1/5 or more of the average particle size of the particle sizes of the base material particles.

When the silicon monoxide (SiO)-containing particles each include a region except silicon monoxide, the particles are referred to as "composite SiO particles." The average particle size of the composite SiO particles is preferably 5 $\mu$m or more and 200 $\mu$m or less from the viewpoint of achieving fluidity suitable for an additive manufacturing method. Further, the average particle size of the composite SiO particles is preferably larger than the average diameter of regions each formed of SiO, which are included in the composite SiO particles. For example, the average particle size of the composite SiO particles may be 2 or more times as large as the average diameter of the regions each formed of SiO, which are included in the composite SiO particles. The average particle size of the composite SiO particles is preferably 5 $\mu$m or more, and the average particle size of the composite SiO particles is more preferably 10 $\mu$m or more. In addition, the average particle size of the composite SiO particles is still more preferably 5 or more times as large as the average diameter of the regions each formed of SiO, which are included in the composite SiO particles. From the viewpoint of achieving high shaping accuracy, and the viewpoint of facilitating the sintering or melting of the powder, when the silicon monoxide (SiO)-containing particles each include the region except silicon monoxide, the average particle size of the silicon monoxide-containing particles is preferably 200 $\mu$m or less, more preferably 150 $\mu$m or less. From the viewpoint of facilitating the melting of the powder, the average particle size of the composite SiO particles is more preferably 100 $\mu$m or less, still more preferably 50 $\mu$m or less.

In SiO-containing particles each containing SiO and a compound except SiO, the average particle size of constituent particles each formed of SiO is obtained by observing the powder, for example, with a scanning electron microscope (SEM) to measure the areas of regions each formed of SiO, and calculating the circle equivalent diameters of the areas. A plurality of (100 or more) regions each formed of SiO are subjected to the measurement, and their median is adopted as the average particle size of the constituent particles each formed of SiO.

The particle size in this embodiment refers to the circle equivalent diameter (Heywood diameter) of each individual particle. The average particle size of particles each formed of specific composition, which are contained in the powder for shaping, does not refer to the particle sizes of the individual particles, but is the median (by number) of a group of particles having the same composition, and does not mean that no particle having a size except that described as the average particle size is contained in the powder.

The average particle size of the particles may be calculated by the following method in the same manner as in the case of the average particle size of the constituent particles. The powder is observed, for example, with a scanning electron microscope (SEM). The areas of particles therein each having specific composition, for which the average particle size is to be calculated, are measured, and the circle equivalent diameters of the areas are calculated. The calculation method for the average particle size may be applied irrespective of the states of the particles.

The powder for shaping of this embodiment is preferably free of a resin binder. This is because the resin binder has a markedly low melting point as compared to those of the other compounds contained in the powder, and hence may burn up with a significant impact through irradiation with laser light to cause a void or a defect to be present in a shaped region.

In addition, when the powder contains elemental carbon having sublimability, carbon is bonded to oxygen to escape as a gas, and hence a volume that has been occupied by elemental carbon may become a void. Further, elemental carbon may sublimate through irradiation with laser light to rapidly gasify, to thereby adversely influence shaping. Specifically, the rapid gasification may apply a stress to a portion in which the powder for shaping has been melted or the solidified portion, leading to a deformed shaped object. Accordingly, it is preferred that the powder be substantially free of elemental carbon. However, the ratio of carbon atoms to the metal element in the plurality of compounds contained in the powder only needs to be 1,000 ppm or less in terms of molar ratio.

The powder for shaping of this embodiment is not limited as to, for example, whether the powder for ceramic shaping is in a crystalline or amorphous state, or a mixture thereof. In addition, the powder and the manufactured ceramic shaped object do not need to be completely identical to each other in composition, and may be different from each other particularly in, for example, oxidation state or nitridation state.

<Method of manufacturing Ceramic Shaped Object>

According to one embodiment of the present disclosure, there is provided a method of manufacturing a ceramic shaped object (ceramic structural body). The method of manufacturing a ceramic shaped object of this embodiment is characterized by heating, with light, a material using the powder for ceramic shaping of the present disclosure to shape a shaped object, and melting at least one or more kinds of oxide particles through the heating.

The manufacturing method of this embodiment is suitably used in an additive manufacturing method involving performing shaping through irradiation of the powder for shaping with laser light in accordance with slice data generated based on three-dimensional data on a ceramic shaped object to be manufactured. Specifically, the manufacturing method of this embodiment is suitably used in a manufacturing method using powder bed fusion or a cladding method. The manufacturing process includes manufacturing a ceramic shaped object by alternately performing a placement step and an irradiation step described below a plurality of times.

In the placement step, oxide particles are placed on a base, and in the irradiation step, part or the whole of the oxide particles are irradiated with laser light so that the oxide particles at a site irradiated with the laser light may be melted and solidified. Thus, an intermediate shaped object is obtained.

When the shaping is performed by using powder bed fusion, the placement step and the irradiation step are performed by: spreading and leveling the above-mentioned powder for shaping on a substrate so as to have a predetermined thickness; and then irradiating the powder with the laser light. When the shaping is performed by using the cladding method, the placement step and the irradiation step are performed by: jetting the powder for shaping of the present disclosure to a predetermined site; and irradiating the predetermined site with the laser light.

The wavelength of the laser light to be used in the shaping is not limited, but laser light adjusted to a desired focal point size, such as a diameter of from 10 $\mu$m to 2 mm, in a lens or a fiber is preferably used. The focal point size is one of the parameters that influence the shaping accuracy, and in order to satisfy a shaping accuracy of 100 $\mu$m (0.1 mm), in some situations, a line width of the laser light is preferably comparable to the shaping accuracy, and the focal point size is preferably equal to or less than the diameter of the laser light, that is, 100 $\mu$m. The irradiation with the laser light is not limited as to being continuous or pulsed. For the laser light, there may be suitably used, for example, laser light having a wavelength in the vicinity of 1,000 nm, which is generated from a Nd:YAG laser or a Yb fiber laser. This is because a SiO component shows a particularly high absorbing ability for light at a wavelength of about 1 $\mu$m.

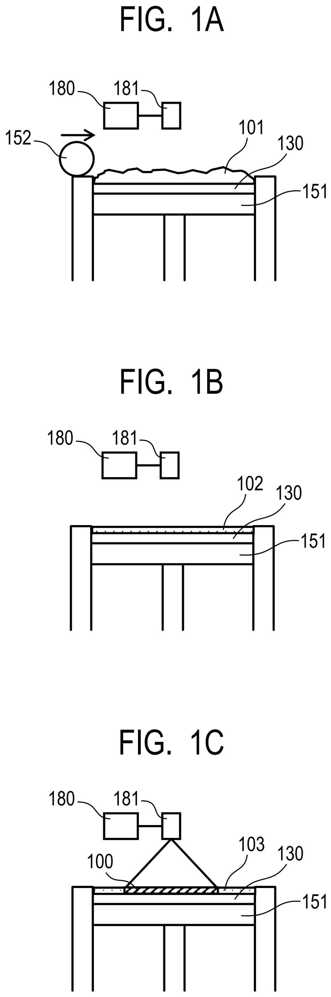

Fig. 1A to Fig. 1H are conceptual views of a three-dimensional shaping apparatus using powder bed fusion (infrared laser melting method). A basic flow of shaping by a manufacturing method using an infrared laser melting method in which the powder for shaping of the present disclosure can be used is described with reference to the schematic views of Fig. 1A to Fig. 1H.

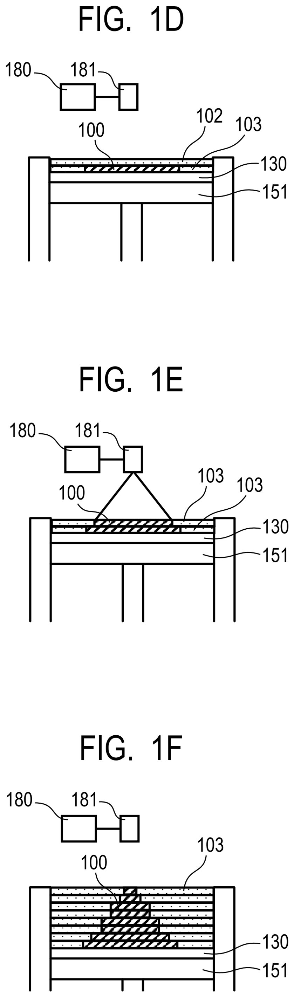

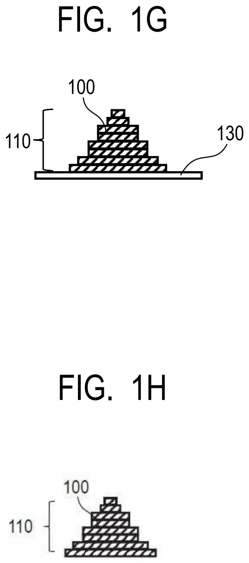

As illustrated in Fig. 1A, first, a raw material powder 101 is placed on a base 130 set to a stage 151, and is spread and leveled with a roller 152 so as to have a predetermined thickness. Thus, as illustrated in Fig. 1B, a powder layer 102 is formed. As illustrated in Fig. 1C, the powder layer 102 is irradiated with laser light emitted from a laser light source 181 based on slice data generated from geometric data on a desired three-dimensional model while being scanned with a scanner unit 180. In a laser light irradiation range, the raw material powder is melted and then solidified, and thus a solidified portion 100 corresponding to slice data of one layer is formed. Subsequently, as illustrated in Fig. 1D, the stage 151 is lowered, and a new powder layer 102 is formed on the solidified portion 100. As illustrated in Fig. 1E, the powder layer 102 is irradiated with laser light based on the slice data. As illustrated in Fig. 1F, a series of those steps is repeated a number of times corresponding to the slice data, to thereby provide a shaped object 110. An unsolidified raw material powder is indicated by reference numeral 103. Finally, as illustrated in Fig. 1G, an unsolidified raw material powder 103 is removed, and as illustrated in Fig. 1H, an unnecessary portion of the shaped object 110 is removed or the shaped object 110 and the base 130 are separated from each other as required. Further, after that, heat treatment may be performed as required.

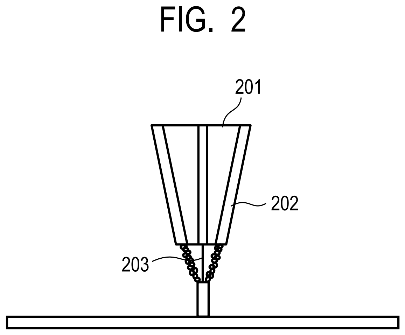

A cladding system is described with reference to Fig. 2. The cladding system is a technique involving jetting a powder from each of a plurality of powder supply holes 202 in a cladding nozzle 201, and irradiating a region in which the respective powders are focused with laser light 203, to thereby sequentially manufacture a ceramic shaped object at a desired site. The cladding system has a feature in that shaping can be performed on a curved surface or the like.

In addition, in the manufacturing process, an atmosphere may be controlled. In the manufacturing process, not only the air atmosphere, but also an inert atmosphere containing nitrogen or a noble gas, an atmosphere in which compounds contained in the powder for shaping are easily reduced, such as an atmosphere containing hydrogen or a reduced-pressure atmosphere, or an oxygen atmosphere is preferably adopted. When such control of the atmosphere is performed, a powder containing a compound in a state of being oxidized or reduced from the stoichiometric ratio can be used in the manufacture of a ceramic shaped object.

In such manufacturing process of this embodiment as described above, the use of the powder for shaping of the present disclosure enables stable shaping, and can provide a ceramic shaped object in which shaping accuracy is secured.

The ceramic shaped object to be manufactured by using the powder for shaping of this embodiment is not limited to one made of an inorganic material in a crystalline state. As long as desired physical property values are obtained, part or more than a half of the ceramic shaped object may be in an amorphous state. In addition, through the above-mentioned manufacturing process, a ceramic shaped object containing, for example, a region close to a metal state resulting from reduction of the powder for shaping may be manufactured.

The method of manufacturing a ceramic shaped object of this embodiment may include, in addition to a shaping step of obtaining an intermediate shaped object from the material using the powder, a heating step of subjecting the intermediate shaped object to heat treatment, and the heating step can heal a crack present in the intermediate shaped object.

The powder having been melted through irradiation with an energy beam such as laser light is cooled by emitting heat to the periphery to be solidified. Thus, the intermediate shaped object is formed.

In the case of a ceramic, the thermal diffusivity of the ceramic is lower than that of a metal or the like, and hence a temperature difference between the temperature of a site having been melted and the temperature of its periphery is relatively increased. Accordingly, when the shaping is performed by an infrared laser melting method without preheating at high temperature, many microcracks occur in the intermediate shaped object. The microcracks are distributed throughout (on the surface and in the inside of) the intermediate shaped object. When a cross-section of the intermediate shaped object is observed, for example, with a scanning electron microscope, most of the microcracks have widths of from several nanometers to several micrometers. In addition, the microcracks have various lengths of from several micrometers to several millimeters.

When the microcracks are formed in the intermediate shaped object, in the case where a stress is applied to the shaped object, the stress is concentrated in the vicinity of the cracks, and hence the mechanical strength of the shaped object is reduced as compared to that of a material in a bulk state. Accordingly, it is preferred that the microcracks be healed in some way.

An example of the powder for shaping of the present disclosure is a powder for ceramic shaping formed mainly of $Al_2O_3$ particles, $Y_2O_3$ particles, and SiO particles. In such powder, microcracks are self-healed in a firing step after the shaping of the intermediate shaped object by the above-mentioned method. In the inside of an intermediate shaped object formed by an additive manufacturing method involving performing shaping through irradiation of the powder for shaping with laser light, a region containing Y as a main component, a region containing Si as a main component, and a region containing both of Y and Si are locally formed. In a heat treatment step to be performed after the formation of the intermediate shaped object, the regions are softened or melted through heat treatment to penetrate through the microcracks and fill the insides of the microcracks, and thus the cracks are healed. At this time, a heat treatment temperature only needs to be 1,600°C or more, and preferably falls within the range of 1,650°C or more and 1,850°C or less.

In the manufacture of the ceramic shaped object, in order to impart a crack-healing property, and to sufficiently increase the mechanical strength and chemical resistance of the intermediate shaped object, an element ratio Y/Si (molar ratio) in an oxide structural body is important. In the heating step, the region containing Y, the region containing Si, or the region containing both of Y and Si, the region being present in the intermediate shaped object, forms a compound, such as $Y_2Si_2O_7$ or $Y_2SiO_5$, and is softened or melted to penetrate through and fill the cracks. Thus, the cracks are healed by the compound containing Y and Si. The healed region is a compound containing Y and Si, and reductions in mechanical characteristics and chemical resistance of the ceramic structural body resulting from the region can be prevented as compared to a case where the region is present as a region containing silicon oxide as a main component. When the element ratio of Y to Si is $25/75 \leq Y/Si \leq 95/5$, the above-mentioned effects can be obtained. The lower limit value of the amount of Y in the element ratio of Y to Si is an advantageous condition for the above-mentioned crack-healed region to become a compound containing Y and Si. When the amount of Y is insufficient with respect to Si, the region containing silicon oxide as a main component may remain in the structural body to cause reductions in mechanical characteristics and chemical resistance. In addition, the upper limit value of the amount of Y is an advantageous condition for sufficiently healing cracks in the shaped object. When the amount of Si is insufficient, a region that cannot heal the cracks in the shaped object remains, and the region may result in the occurrence of reductions in mechanical characteristics.

In addition, before the heating step, the presence of the fine cracks may be made use of and the crack portions may be impregnated with a modifier for function modification. For example, the intermediate shaped object may be impregnated with Li, Na, K, Mg, Ca, Y, Al, Ti, Zr, Hf, Si, or the like through use of a metal element-containing liquid, followed by drying or fixation at 600°C or less. With this configuration, the three-point flexural strength of the ceramic shaped object can be further increased.

<Ceramic Structural Body>

According to one embodiment of the present disclosure, there is provided a ceramic structural body. In addition, the ceramic structural body of this embodiment includes the powder for shaping of the present disclosure or the shaped object to be manufactured by the method of manufacturing a ceramic shaped object of the present disclosure.

The ceramic structural body of this embodiment contains at least Al, Y, and Si, and the element ratio Y/Si of Y to Si satisfies $25/75 \leq Y/Si \leq 95/5$.

The ceramic structural body of this embodiment has a healing function for a crack or a ruptured portion. For example, the ceramic structural body has a function in which, when the rupture is caused by an external force during use of the ceramic structural body, the rupture is self-healed by bringing the ruptured portions together and performing a heating step again, and the ceramic structural body can be restored to the same level as that of the original mechanical strength. At this time, a heat treatment temperature only needs to be 1,600°C or more, and preferably falls within the range of 1,600°C or more and 1,850°C or less, more preferably falls within the range of 1,650°C or more and 1,790°C or less. This feature is an effect obtained by virtue of the fact that the ceramic structural body of this embodiment includes the region containing Y, the region containing Si, or the region containing both of Y and Si, and has the element ratio (molar ratio) of Y to Si of $25/75 \leq Y/Si \leq 95/5$. When those regions are present, for example, a compound, such as $Y_2Si_2O_7$ or $Y_2SiO_5$, is formed through heating, and is softened or melted to penetrate through and fill the cracks or fill the ruptured portion. Thus, the cracks are healed by the compound containing Y and Si. The healed region is a compound containing Y and Si, and reductions in mechanical characteristics and chemical resistance of the ceramic structural body resulting from the region can be prevented as compared to a case where the region is present as a region containing silicon oxide as a main component. The lower limit value of the amount of Y in the element ratio of Y to Si is an advantageous condition for the above-mentioned crack-healed region to become a compound containing Y and Si. When the amount of Y is insufficient with respect to Si, the region containing silicon oxide as a main component may remain in the structural body to cause reductions in mechanical characteristics and chemical resistance. In addition, the upper limit value of the amount of Y is an advantageous condition for sufficiently healing cracks or the ruptured portion in the shaped object. When the amount of Si is insufficient, a region that cannot heal the cracks or the ruptured portion in the shaped object remains, and the region may result in the occurrence of reductions in mechanical characteristics.

In the ceramic structural body of this embodiment, Y/Si more preferably satisfies $1.0 \leq Y/Si \leq 10.0$.

In addition, the ceramic structural body of this embodiment preferably satisfies at least any one of the following conditions, in terms of molar fraction: the content of Al is higher than that of Y; or the content of Al is higher than that of Si.

Further, the ceramic structural body of this embodiment preferably contains Zr. With this configuration, the mechanical strength of the ceramic structural body can be further increased. The composition of the ceramic structural body more preferably includes 3 mol% or more, more preferably includes 7 mol% or more of Zr in terms of oxide.

When the ceramic structural body of this embodiment contains Zr, the ceramic structural body preferably satisfies at least any one of the following conditions: the content of Al is higher than that of Zr; the content of Y is higher than that of Zr; or the content of Zr is higher than that of Si.

In addition, the ceramic structural body of this embodiment preferably contains 50 mol% or more of Al in the composition of the ceramic structural body in terms of oxide. With this configuration, the mechanical strength and chemical resistance of the ceramic structural body can be further increased. The ceramic structural body more preferably contains 60 mol% or more, still more preferably contains 70 mol% or more, still further more preferably contains 80 mol% or more of Al.

However, in the ceramic structural body of this embodiment, the molar fraction of Zr may be higher than the molar fraction of Al.

The ceramic structural body of this embodiment preferably contains Y as a multiple oxide. With this configuration, the mechanical strength, chemical resistance, and plasma resistance of the ceramic structural body can be further increased. The ceramic structural body preferably contains an oxide containing Y and Al. The oxide containing Y and Al refers to a multiple oxide mainly containing Y and Al. In the oxide containing Y and Al, the ratio of Y to Al is not limited, and preferred examples thereof include $Y_3Al_5O_{12}$, $YAlO_3$, and $Y_4Al_2O_9$. The ceramic structural body preferably contains $Y_3Al_5O_{12}$ because the mechanical strength and the chemical resistance can be increased. In addition, the ceramic structural body preferably contains $YAlO_3$ and $Y_4Al_2O_9$ because the mechanical strength and the plasma resistance can be increased. The oxide containing Y and Al preferably contains at least any one of $YAlO_3$ or $Y_4Al_2O_9$.

Typically, only a phase that is a stable phase is formed in the oxide containing Y and Al in accordance with the ratio of Y to Al. However, when, for example, the shaping is performed through irradiation with an energy beam such as laser light, an oxide containing Y and Al including a plurality of phases including a metastable phase may be formed in the ceramic structural body because of the formation of a non-uniform structure in the ceramic structural body through local heating, or a change in phase structure caused by rapid cooling and solidification.

In addition, the ceramic structural body of this embodiment preferably contains Si as a multiple oxide. With this configuration, the mechanical strength and chemical resistance of the ceramic structural body can be further increased. The ceramic structural body more preferably contains an oxide containing Y and Si. The oxide containing Y and Si refers to a multiple oxide mainly containing Y and Si.

The ceramic structural body of this embodiment may contain the oxide containing Y and Al, and the oxide containing Y and Si. At this time, the volume of the oxide containing Y and Al in the ceramic structural body is preferably larger than the volume of the oxide containing Y and Si. With this configuration, the mechanical strength and chemical resistance of the ceramic structural body can be further increased.

The ceramic structural body of this embodiment preferably has a density of 4.19 [g/cm$^3$] or less.

In addition, the ceramic structural body of this embodiment preferably has a three-point flexural strength value of 152 [MPa] or more

In addition, the ceramic structural body of this embodiment preferably has a ratio "three-point flexural strength [MPa]/density [g/cm$^3$]" of 40 [MPa·cm$^3$/g] or more.

<Application Example>

According to one embodiment of the present disclosure, there is provided equipment serving as an application example of the ceramic powder of the present disclosure. The equipment serving as the application example includes a ceramic shaped object and at least any one of an electrical component, an optical component, a metal component, or a resin component.

Various kinds of equipment may be formed by combining a mechanical component that is a ceramic shaped object with at least any one of an electrical component, an optical component, a metal component, or a resin component. The mechanical component is, for example, a link component used as a hand or an arm, but may be a transmission component, such as a gear, a cam, or a shaft, or a coupling component such as a screw. The mechanical component of this embodiment may be used as a heat-resistant component or a refractory component. The equipment including the mechanical component may be a printing equipment or an office equipment, such as an inkjet printer, a laser printer, a scanner, a copying machine, or a multifunction peripheral. The equipment may be an imaging equipment, such as a camera, a display, or a projector. The equipment may be an optical equipment, such as an interchangeable lens or binoculars. The equipment may be a medical equipment, such as an X-ray imaging apparatus, a CT system, an MRI system, or an endoscope. The equipment may be an industrial equipment, such as an exposure apparatus, a film forming apparatus, a generator, or a robot. The equipment may be any one of various kinds of movable or transportation equipment, such as an automobile, an aircraft, and a ship. In addition, the equipment may be a scientific equipment, such as a nuclear reactor (a fusion reactor or a fission reactor) or an accelerator, or a space equipment, such as an artificial satellite.

(Examples)

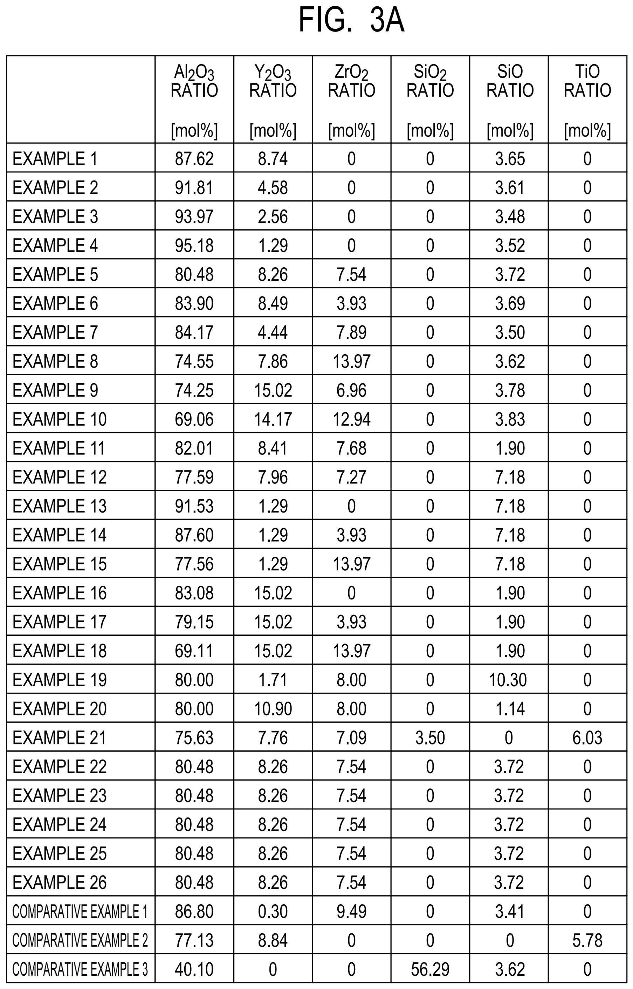

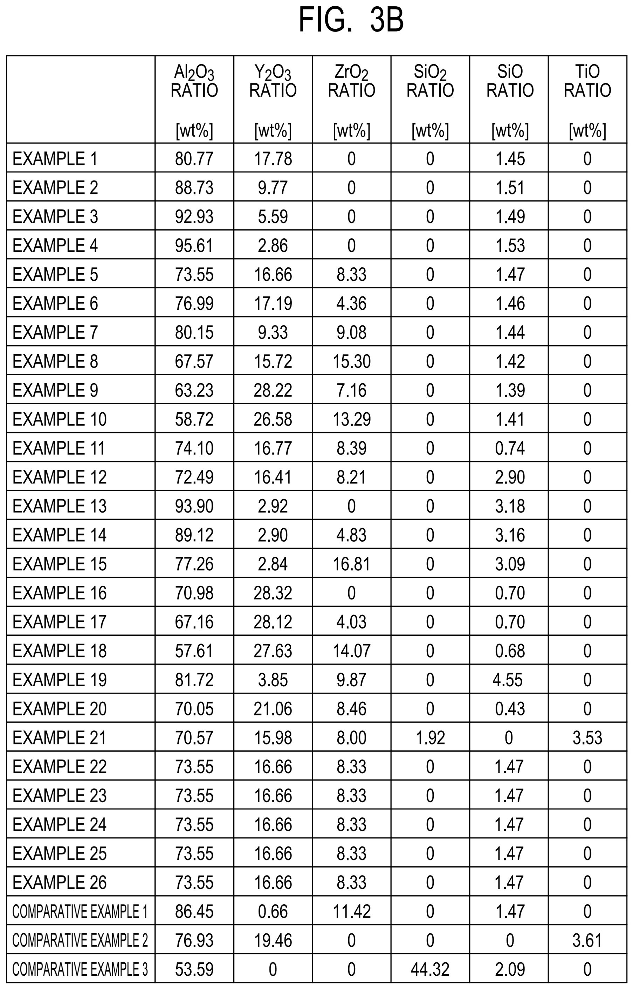

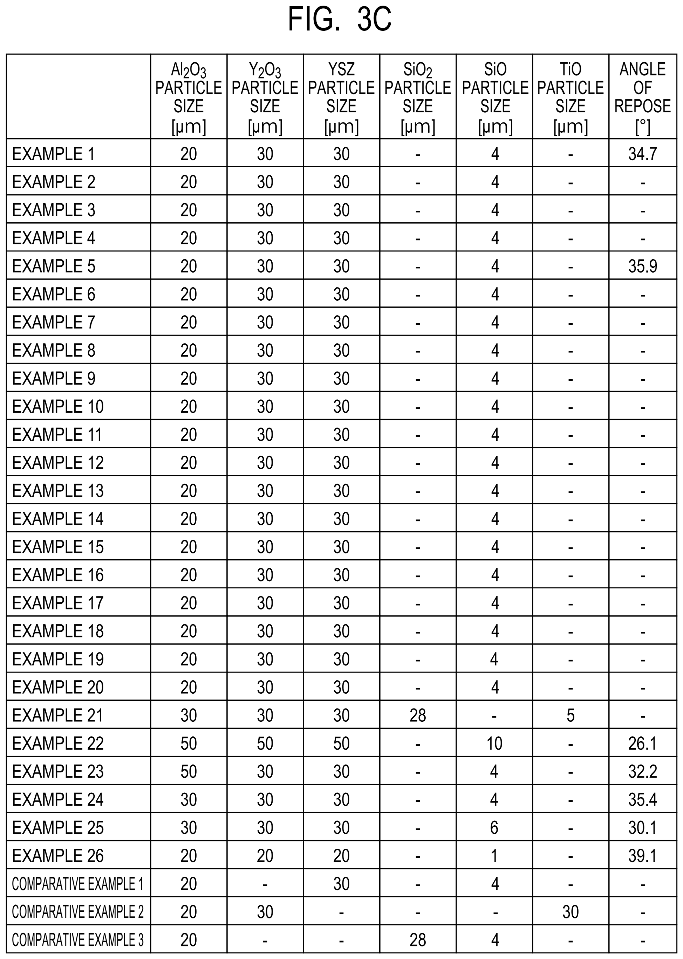

A list of Examples of the present disclosure and Comparative Examples is shown in Fig. 3A to Fig. 3E. The compositions of the powders for shaping in terms of molar fraction are shown in Fig. 3A. The compositions of the powders for shaping in terms of mass fraction are shown in Fig. 3B. The particle sizes and angles of repose of the powders for shaping (measured by a test in conformity with JIS R9301-2-2) are shown in Fig. 3C. The element ratios between various elements and molar ratios of oxides in the powders for shaping are shown in Fig. 3D-1 and Fig. 3D-2. The firing temperature, the firing time, the density, the relative density, the three-point flexural strength (measured by a test in conformity with JIS R1601), the crack self-healing property, the alkali dissolution mass reduction amount (result of measurement of the alkali resistance by the method described later), and the ratio "strength/density" are shown in Fig. 3E.

(Example 1)

Al$_2$O$_3$ particles having a median of particle sizes of about 20 μm and a density of 3.9 g/cm$^3$, Y$_2$O$_3$ particles having a median of particle sizes of about 30 μm and a density of 5.0 g/cm$^3$, and SiO particles having a median of particle sizes of about 4 μm and a density of 2.1 g/cm$^3$ were prepared. The Y$_2$O$_3$ particles and the SiO particles were weighed at ratios of 2.2 g and 0.18 g, respectively, with respect to 10 g of Al$_2$O$_3$ particles, and loaded into a 1 L polyethylene vessel up to 70%, followed by addition of 5 mm diameter zirconia beads. The mixture was subjected to a roller mixer for 30 minutes to prepare a powder having a composition ratio shown in Fig. 3A. The angle of repose of the powder was 34.7°, and it was recognized that the fluidity was satisfactory. The powder configuration is as follows: the powder contains Al, Y, and Si as oxide particles; and the molar ratio of Y to Si is 83/17, which satisfies the suitable composition range of the present disclosure.

An intermediate shaped object having a shape of 5 mm (width)×5 mm (thickness)×38 mm (total length) was produced as a precursor for forming a ceramic shaped object through use of ProX DMP 100 manufactured by 3D Systems, Inc. in the infrared laser melting method under the conditions of a lamination thickness of 20 μm, a laser power of 45 W, a scanning speed of 100 mm/sec, and a scan pitch of 140 μm.

The produced intermediate shaped object was subjected to heat treatment under the condition that the shaped object was held at a maximum temperature of 1,700°C for 20 minutes. A SEM observation image and elemental mapping images of Al, Y, Si, and O according to SEM-EDX evaluations for the obtained structural body are shown in Fig. 4A. A region formed of an oxide mainly containing Al, a region formed of an oxide mainly containing Y and Al, and a region formed of an oxide mainly containing Y and Si were observed. From the SEM observation image and the elemental mapping images, the areas of the region formed of the oxide mainly containing Y and Al, and the region formed of the oxide mainly containing Y and Si were calculated, and a simple evaluation of the volumes of the respective regions in the structural body was performed. While the volume of the region formed of the oxide mainly containing Y and Si was 5.9% of the entire field of view, the volume of the region formed of the oxide mainly containing Y and Al was 28.6% of the entire field of view, and was larger than the volume of the region formed of the oxide mainly containing Y and Si. This satisfies the preferred configuration of the present disclosure. In addition, it was recognized from the composition ratio of the semiquantitative values according to SEM-EDX evaluations that the region formed of the oxide mainly containing Y and Al had regions of $Y_3Al_5O_{12}$, $YAlO_3$, and $Y_4Al_2O_9$.

The obtained structural body was in a state in which a crack region was healed, and had a three-point flexural strength value of 173 MPa. Further, the test piece ruptured into two pieces in the three-point flexural strength test was placed so that the rupture surfaces of the two pieces were brought together. Then, the same step as the above-mentioned heat treatment was performed again. As a result, the ruptured portion was healed, and it was recognized that the structural body had a joining property at the ruptured portion.

In addition, the obtained structural body was subjected to measurement of the alkali resistance. ETHOS PRO manufactured by Milestone General K.K. was used for the measurement. The sample was immersed in a 20 mass% alkali solution of NaOH, heated up to 200°C and held for 40 minutes, and a mass change per unit area of the sample before and after the treatment was evaluated. For reference, the alkali resistance of a general alumina material in an equivalent test is about 2.6 $g/m^2$ in terms of mass change per unit area. The mass change per unit area of this Example was 3.2 $g/m^2$, which was comparable to that of an alumina material, and satisfactory alkali resistance was recognized. The ratio "strength/density" was 46 $MPa \cdot cm^3/g$, and hence the structural body was sufficiently light and strong.

(Examples 2 to 4)

Powders mixed at amounts shown in Fig. 3A were prepared by changing only the mixing ratio of the particles from that of Example 1.

The same shape was produced, and the same heat treatment was performed with the same shaping apparatus and under the same shaping conditions as those in Example 1. The structural bodies obtained in Examples 1 to 4 were each in a state in which a crack region was healed, and each had a three-point flexural strength value as high as 150 MPa or more. The ratio "strength/density" in each case was 40 $MPa \cdot cm^3/g$ or more, and hence each of the structural bodies was sufficiently light and strong.

(Consideration with regard to Examples 1 to 4, 13, and 16)

The powder configurations of Examples 13 and 16 may be adopted instead of those of Examples 1 to 4.

For Examples 13 and 16, powders mixed at amounts shown in Fig. 3A is different in only the mixing ratio of the particles from that of Example 1. The similar shaping can be performed with the same shaping apparatus and under the same shaping conditions as those in Example 1 to obtain structural bodies. The powder configurations of Examples 1 to 4, 13, and 16 each satisfy the following conditions.

The powder contains Al, Y, and Si, and the molar ratio of Y to Si satisfies $25/75 \leq Y/Si \leq 95/5$.

The composition range of an element ratio Al/Y of Al to Y of 4.60 or more and 73.78 or less is satisfied, and the composition range of an element ratio Al/Si of Al to Si of 21.60 or more and 87.45 or less is satisfied.

The powder contains 50 mol% or more of aluminum oxide, 1.29 mol% or more and 15.02 mol% or less of yttrium oxide, and 1.90 mol% or more and 7.18 mol% or less of silicon oxide.

In addition, the ceramic shaped objects obtained in Examples 1 to 4, 13, and 16 each satisfy the following conditions.

The ceramic shaped object contains Al, Y, and Si, and the element ratio Y/Si of Y to Si satisfies $25/75 \leq Y/Si \leq 95/5$.

The element ratio Al/Y of Al to Y satisfies 4.60 or more and 73.78 or less, and the element ratio Al/Si of Al to Si satisfies 15.53 or more and 140.35 or less.

The ceramic shaped object contains 50 mol% or more of aluminum oxide, 1.29 mol% or more and 15.02 mol% or less of yttrium oxide, and 1.90 mol% or more and 7.18 mol% or less of silicon oxide.

In addition, the ceramic shaped objects obtained in Examples 1 to 4 each satisfied the following conditions. That is, the ceramic shaped object had a density of 4.19 $[g/cm^3]$ or less. The ceramic shaped object had a three-point flexural strength value of 152 [MPa] or more. The ratio "three-point flexural strength [MPa]/density $[g/cm^3]$" was 40 $[MPa \cdot cm^3/g]$ or more.

(Example 5)

For the purpose of increasing the strength, yttrium-stabilized zirconia 3YSZ particles ($ZrO_2$ particles having added thereto 3 mol% $Y_2O_3$) having a median of particle sizes of about 30 $\mu m$ and a density of 5.7 $g/cm^3$ were mixed in an amount shown in Fig. 3A with the powder of Example 1 by the same method as that for other particles. The angle of repose of the powder was 35.9°, and it was recognized that the fluidity was satisfactory. The powder satisfies the suitable composition range in the same manner as in Example 1. The same shape was produced, and the same heat treatment was performed by using the powder with the same shaping apparatus and under the same shaping conditions as those in Example 1. A SEM observation image and elemental mapping images of Al, Y, Zr, Si, and O according to SEM-EDX evaluations for the obtained structural body are shown in Fig. 4B. A region formed of an oxide mainly containing Al, a region formed of an oxide mainly containing Y and Al, a region formed of an oxide mainly containing Zr and Y, and a region formed of an oxide mainly containing Y and Si were observed. From the SEM observation image and the elemental mapping images, the areas of the region formed of the oxide mainly containing Y and Al, and the region formed of the oxide mainly containing Y and Si were calculated, and a simple evaluation of the volumes of the respective regions in the structural body was performed. While the volume of the region formed of the oxide mainly containing Y and Si was 4.9% of the entire field of view, the volume of the region formed of the oxide mainly containing Y and Al was 12.7 % of the entire field of view, and was larger than the volume of the region formed of the oxide mainly containing Y and Si. This satisfies the preferred configuration of the present disclosure. In addition, it was recognized from the composition ratio of the semiquantitative values according to SEM-EDX evaluations that the region formed of the oxide mainly containing Y and Al had regions of $Y_3Al_5O_{12}$, $YAlO_3$, and $Y_4Al_2O_9$.

The obtained structural body was in a state in which a crack region was healed, and had a three-point flexural strength value as high as 200 MPa or more. Further, the test piece ruptured into two pieces in the three-point flexural strength test was placed so that the rupture surfaces of the two pieces were brought together. Then, the same step as the above-mentioned heat treatment was performed again. As a result, the ruptured portion was healed, and it was recognized that the structural body had a joining property at the ruptured portion.

In addition, the obtained structural body was subjected to measurement of the alkali resistance by the same method as that in Example 1, and a mass change per unit area of the sample before and after the treatment was evaluated. The mass change per unit area of this Example was 3.4 $g/m^2$, which was comparable to that of an alumina material, and satisfactory alkali resistance was recognized. The ratio "strength/density" was 55 MPa·$cm^3$/g, and hence the structural body was sufficiently light and strong.

(Examples 6 to 12)

Powders mixed at amounts shown in Fig. 3A were prepared by changing only the mixing ratio of the particles from that of Example 5. The same shape was produced, and the same heat treatment was performed with the same shaping apparatus and under the same shaping conditions as those in Example 1. The structural bodies obtained in Examples 6 to 12 were each in a state in which a crack region was healed, and each had a three-point flexural strength value as high as 150 MPa or more. The ratio "strength/density" in each case was 40 MPa·$cm^3$/g or more, and hence each of the structural bodies was sufficiently light and strong.

(Consideration with regard to Examples 5 to 12, 14, 15, 17, 18, and 21)

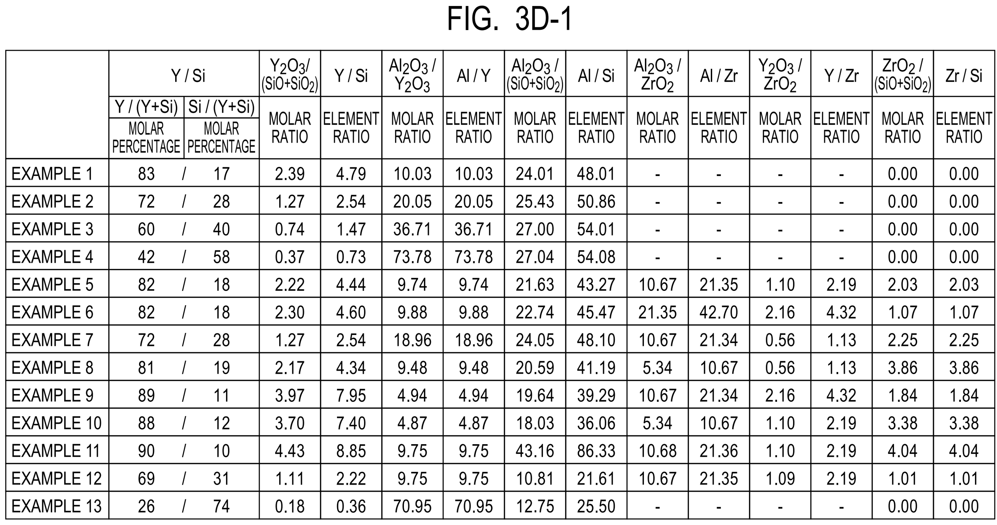

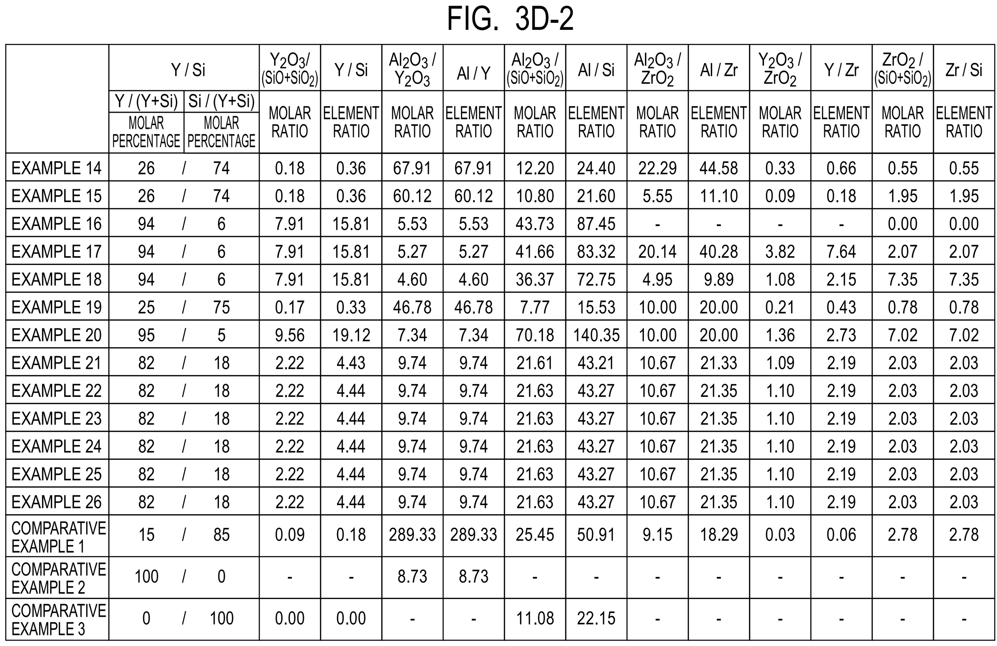

The powder configurations of Examples 14, 15, 17, 18, and 21 may be adopted instead of those of Examples 6 to 12.. For Examples 14, 15 and 17 to 21, powders mixed at amounts shown in Fig. 3A and with particle sizes shown in Fig. 3C is different in only the mixing ratio of the particles from that of Example 5. The similar shaping can be performed with the same shaping apparatus and under the same shaping conditions as those in Example 5 to obtain structural bodies. The value "0.33" shown as Y/Si (Element Ratio)in FIG. 3D-2 lies within a range Y/Si≥25/75 due to the common rounding conventions. The value "19.12" shown as Y/Si (Element Ratio) in FIG. 3D-2 lies within a range Y/Si≤95/5 due to the common rounding conventions. The powder configurations of Examples 5 to 12, 14, 15, 17, 18, and 21 each satisfy the following conditions.

The powder contains Al, Y, and Si, and the molar ratio of Y to Si satisfies 25/75≤Y/Si≤95/5.

The composition range of an element ratio Al/Y of Al to Y of 4.60 or more and 73.78 or less is satisfied, and the composition range of an element ratio Al/Si of Al to Si of 21.60 or more and 87.45 or less is satisfied.

The composition range of an element ratio Al/Zr of Al to Zr of 9.89 or more and 44.58 or less is satisfied, the composition range of an element ratio Y/Zr of Y to Zr of 0.18 or more and 7.64 or less is satisfied, and the composition range of an element ratio Zr/Si of Zr to Si of 0.55 or more and 7.35 or less is satisfied.

The powder contains 50 mol% or more of aluminum oxide, 1.29 mol% or more and 15.02 mol% or less of yttrium oxide, and 1.90 mol% or more and 7.18 mol% or less of silicon oxide.

The powder contains 3.93 mol% or more and 13.97 mol% or less of zirconium oxide.

(Examples 22 to 26)

Powders mixed at amounts shown in Fig. 3A were prepared by changing only the particle size of the particles from that of Example 5. The angles of repose of the powders were each 40° or less, and it was recognized that the fluidity was satisfactory. The same shape was produced, and the same heat treatment was performed with the same shaping apparatus and under the same shaping conditions as those in Example 1. The structural bodies obtained in Examples 22 to 26 were each in a state in which a crack region was healed, and each had a three-point flexural strength value as high as 150 MPa or more. The ratio "strength/density" in each case was 40 MPa·$cm^3$/g or more, and hence each of the structural bodies was sufficiently light and strong.

In addition, the ceramic shaped objects obtained in Examples 5 to 12, 14, 15, and 17 to 26 each satisfy the following conditions.

The ceramic shaped object contains Al, Y, and Si, and the element ratio Y/Si of Y to Si satisfies 25/75≤Y/Si≤95/5.

The element ratio Al/Y of Al to Y satisfies 4.60 or more and 73.78 or less, and the element ratio Al/Si of Al to Si satisfies 15.53 or more and 140.35 or less.

The element ratio Al/Zr of Al to Zr satisfies 9.89 or more and 44.58 or less, the element ratio Y/Zr of Y to Zr satisfies 0.18 or more and 7.64 or less, and the element ratio Zr/Si of Zr to Si satisfies 0.55 or more and 7.35 or less.

The ceramic shaped object contains 50 mol% or more of aluminum oxide, 1.29 mol% or more and 15.02 mol% or less of yttrium oxide, 1.90 mol% or more and 7.18 mol% or less of silicon oxide, and 3.93 mol% or more and 13.97 mol% or less of zirconium oxide.

In addition, the ceramic shaped objects obtained in Examples 5 to 12 and 22 to 26 each satisfied the following conditions. That is, the ceramic shaped object had a density of 4.19 [g/cm$^3$] or less. The ceramic shaped object had a three-point flexural strength value of 152 [MPa] or more. The ratio "three-point flexural strength [MPa]/density [g/cm$^3$]" was 40 [MPa·cm$^3$/g] or more.

(Comparative Example 1)

Al$_2$O$_3$ particles having a median of particle sizes of about 20 $\mu$m and a density of 3.9 g/cm$^3$, yttrium-stabilized zirconia 3YSZ particles having a median of particle sizes of about 30 $\mu$m and a density of 5.7 g/cm$^3$, and SiO particles having a median of particle sizes of about 4 $\mu$m and a density of 2.1 g/cm$^3$ were prepared, and were mixed at amounts shown in Fig. 3A. The powder configuration is an example of a situation in which the molar ratio of Y to Si is 0.15/0.85, which does not satisfy the suitable composition range of the present disclosure. The same shape was produced with the same shaping apparatus and under the same shaping conditions as those in Example 1. The heat treatment was performed by changing the maximum temperature to 1,790°C. In the obtained structural body, a crack region was not sufficiently healed, and the obtained structural body had a three-point flexural strength value as low as 61 MPa. The ratio "strength/density" was 15 MPa·cm$^3$/g, and hence it was not able to be said that the structural body was light and strong.

(Comparative Example 2)

Al$_2$O$_3$ particles having a median of particle sizes of about 20 $\mu$m and a density of 3.9 g/cm$^3$, Y$_2$O$_3$ particles having a median of particle sizes of about 30 $\mu$m and a density of 5.0 g/cm$^3$, and SiO particles having a median of particle sizes of about 30 $\mu$m were prepared, and were mixed at amounts shown in Fig. 3A. The powder configuration is an example of a situation in which the molar ratio of Y to Si is 1.00/0.00, which does not satisfy the suitable composition range of the present disclosure. The same shape was produced, and the same heat treatment was performed with the same shaping apparatus and under the same shaping conditions as those in Example 1. In the obtained structural body, a crack region was not sufficiently healed, and the obtained structural body had a three-point flexural strength value as low as 64 MPa. The ratio "strength/density" was 17 MPa·cm$^3$/g, and hence it was not able to be said that the structural body was light and strong.

(Comparative Example 3)

Al$_2$O$_3$ particles having a median of particle sizes of about 20 $\mu$m and a density of 3.9 g/cm$^3$, SiO$_2$ particles having a median of particle sizes of about 28 $\mu$m and a density of 2.2 g/cm$^3$, and SiO particles having a median of particle sizes of about 4 $\mu$m and a density of 2.1 g/cm$^3$ were prepared, and were mixed at amounts shown in Fig. 3A. The powder configuration is an example of a situation in which the molar ratio of Y to Si is 0.00/1.00, which does not satisfy the suitable composition range of the present disclosure. The same shape was produced with the same shaping apparatus and under the same shaping conditions as those in Example 1, and the heat treatment was performed by changing the maximum temperature to 1,690°C. The obtained structural body was in a state in which a crack region was healed, and had a three-point flexural strength value of 103 MPa. Further, the obtained structural body was subjected to measurement of the alkali resistance by the same method as that in Example 1, and a mass change per unit area of the sample before and after the treatment was evaluated. The mass change per unit area of this Example was 430 g/m$^2$, which was a value 100 or more times as large as that of an alumina material, and poor alkali resistance was recognized.

According to this embodiment, there can be provided a ceramic shaped object, which can have a mechanical strength of 150 MPa or more, further 200 MPa or more, and can have an alkali resistance of 10 g/m$^2$ or less, further 5 g/m$^2$ or less in a mass reduction amount per unit area, and further has a fine crack-healing property, through use of a direct manufacturing system (powder bed fusion or an infrared laser melting method).

Various embodiments have been described in detail above but it will be understood that the present disclosure is not limited to these embodiments and encompasses all modifications, variants, alternatives and equivalents falling within the scope of the appended claims.

**Claims**

1. A powder (101) for ceramic shaping comprising one or more kinds of oxide particles,

   wherein the powder contains at least Al, Y, and Si, and

wherein the powder has an element ratio Y/Si of Y to Si that satisfies 25/75≤Y/Si≤95/5.

2. The powder according to claim 1, wherein the powder satisfies at least any one of the following conditions:

$$Y/Si \geq 1.0;$$

or

$$Y/Si \leq 10.0.$$

3. The powder according to claims 1 or 2, wherein the powder contains silicon monoxide.

4. The powder according to any one of claims 1 to 3, wherein the powder satisfies at least any one of the following conditions:

a content of Al is higher than that of Y; or
the content of Al is higher than that of Si.

5. The powder according to any one of claims 1 to 4, wherein the powder satisfies at least any one of the following conditions:

an element ratio Al/Y of Al to Y is 4.60 or more and 73.78 or less; or
an element ratio Al/Si of Al to Si is 21.60 or more and 87.45 or less.

6. The powder according to any one of claims 1 to 5, wherein the powder further contains Zr, and wherein the powder satisfies at least any one of the following conditions:

a content of Al is higher than that of Zr;
a content of Y is higher than that of Zr; or
the content of Zr is higher than that of Si.

7. The powder according to any one of claims 1 to 6, the powder further contains Zr, and wherein the powder satisfies at least any one of the following conditions:

an element ratio Al/Zr of Al to Zr is 9.89 or more and 44.58 or less;
an element ratio Y/Zr of Y to Zr is 0.18 or more and 7.64 or less; or
an element ratio Zr/Si of Zr to Si is 0.55 or more and 7.35 or less.

8. The powder according to any one of claims 1 to 7, wherein the one or more kinds of oxide particles include at least one of aluminum oxide particles, silicon oxide particles, yttrium oxide particles and zirconium oxide particles.

9. The powder according to claim 8, wherein the silicon oxide particles each contain silicon monoxide, and/or wherein the zirconium oxide particles each contain Y.

10. The powder according to any one of claims 1 to 9, wherein the powder satisfies at least any one of the following conditions:

the powder contains 50 mol% or more of aluminum oxide;
the powder contains 1.29 mol% or more and 15.02 mol% or less of yttrium oxide;
the powder contains 1.90 mol% or more and 7.18 mol% or less of silicon oxide; or
the powder contains 3.93 mol% or more and 13.97 mol% or less of zirconium oxide.

11. The powder according to claim 8, wherein an average particle size of the oxide particles except the silicon oxide particles contained in the powder is 10 μm or more and 200 μm or less.

12. The powder according to any one of claims 1 to 11, wherein the powder has an angle of repose of 40° or less.

13. A method of manufacturing a ceramic shaped object (110) comprising heating, with light, a material using the powder of any one of claims 1 to 11 to shape a shaped object, wherein the at least one kind of oxide particles are melted through the heating.

14. A method of manufacturing a ceramic shaped object (110) comprising:

a shaping step of obtaining an intermediate shaped object from a material using the powder of any one of claims 1 to 11, and
a heating step of subjecting the intermediate shaped object to heat treatment,
wherein the heating step includes healing a crack present in the intermediate shaped object.

15. The method of manufacturing a ceramic shaped object according to claim 14, wherein the heating step includes performing the heat treatment at 1,600°C or more and 1,850°C or less.

16. A ceramic structural body (110) comprising Al, Y, and Si, wherein the ceramic structural body has an element ratio Y/Si of Y to Si that satisfies 25/75≤Y/Si≤95/5.

17. The ceramic structural body according to claim 16, wherein the ceramic structural body satisfies at least any one of the following conditions:

a content of Al is higher than that of Y; or
the content of Al is higher than that of Si.

18. The ceramic structural body according to claim 16 or 17, wherein the ceramic structural body satisfies at least any one of the following conditions:
an element ratio Y/Si of Y to Si that satisfies $1.0 \leq Y/Si \leq 10.0$;

an element ratio Al/Y of Al to Y is 4.60 or more and 73.78 or less; or
an element ratio Al/Si of Al to Si is 15.53 or more and 140.35 or less.

19. The ceramic structural body according to any one of claims 16 to 18, further comprising Zr, wherein the ceramic structural body satisfies at least any one of the following conditions:

a content of Al is higher than that of Zr;
a content of Y is higher than that of Zr; or
the content of Zr is higher than that of Si.

20. The ceramic structural body according to any one of claims 16 to 19, further comprising Zr, wherein the ceramic structural body satisfies at least any one of the following conditions:

an element ratio Al/Zr of Al to Zr is 9.89 or more and 44.58 or less;
an element ratio Y/Zr of Y to Zr is 0.18 or more and 7.64 or less; or
an element ratio Zr/Si of Zr to Si is 0.55 or more and 7.35 or less.

21. The ceramic structural body according to any one of claims 16 to 20, wherein the ceramic structural body satisfies at least any one of the following conditions:

the ceramic structural body contains 50 mol% or more of aluminum oxide;
the ceramic structural body contains 1.29 mol% or more and 15.02 mol% or less of yttrium oxide;
the ceramic structural body contains 1.90 mol% or more and 7.18 mol% or less of silicon oxide; or
the ceramic structural body contains 3.93 mol% or more and 13.97 mol% or less of zirconium oxide.

22. The ceramic structural body according to any one of claims 16 to 21, comprising an oxide containing Y and Al, and an oxide containing Y and Si, wherein a volume of the oxide containing Y and Al is larger than a volume of the oxide containing Y and Si.

23. The ceramic structural body according to claim 22, wherein the oxide containing Y and Al contains at least any one of $YAlO_3$ or $Y_4Al_2O_9$.

24. The ceramic structural body according to any one of claims 16 to 23, wherein the ceramic structural body satisfies at least any one of the following conditions:

the ceramic structural body has a density of 4.19 $g/cm^3$ or less;
the ceramic structural body has a three-point flexural strength value of 152 MPa or more; or
the ceramic structural body has a ratio "three-point flexural strength MPa/density g/cm$^3$" of 40 MPa·cm$^3$/g or more.

25. Equipment comprising:

the ceramic structural body (110) of any one of claims 16 to 24; and
at least any one of an electric component, an optical component, a metal component, or a resin component.

# FIG. 1A

# FIG. 1B

# FIG. 1C

# FIG. 1D

# FIG. 1E

# FIG. 1F

# FIG. 1G

# FIG. 1H

# FIG. 2

# FIG. 3A

| | Al$_2$O$_3$ RATIO [mol%] | Y$_2$O$_3$ RATIO [mol%] | ZrO$_2$ RATIO [mol%] | SiO$_2$ RATIO [mol%] | SiO RATIO [mol%] | TiO RATIO [mol%] |
|---|---|---|---|---|---|---|
| EXAMPLE 1 | 87.62 | 8.74 | 0 | 0 | 3.65 | 0 |
| EXAMPLE 2 | 91.81 | 4.58 | 0 | 0 | 3.61 | 0 |
| EXAMPLE 3 | 93.97 | 2.56 | 0 | 0 | 3.48 | 0 |
| EXAMPLE 4 | 95.18 | 1.29 | 0 | 0 | 3.52 | 0 |
| EXAMPLE 5 | 80.48 | 8.26 | 7.54 | 0 | 3.72 | 0 |
| EXAMPLE 6 | 83.90 | 8.49 | 3.93 | 0 | 3.69 | 0 |
| EXAMPLE 7 | 84.17 | 4.44 | 7.89 | 0 | 3.50 | 0 |
| EXAMPLE 8 | 74.55 | 7.86 | 13.97 | 0 | 3.62 | 0 |
| EXAMPLE 9 | 74.25 | 15.02 | 6.96 | 0 | 3.78 | 0 |
| EXAMPLE 10 | 69.06 | 14.17 | 12.94 | 0 | 3.83 | 0 |
| EXAMPLE 11 | 82.01 | 8.41 | 7.68 | 0 | 1.90 | 0 |
| EXAMPLE 12 | 77.59 | 7.96 | 7.27 | 0 | 7.18 | 0 |
| EXAMPLE 13 | 91.53 | 1.29 | 0 | 0 | 7.18 | 0 |
| EXAMPLE 14 | 87.60 | 1.29 | 3.93 | 0 | 7.18 | 0 |
| EXAMPLE 15 | 77.56 | 1.29 | 13.97 | 0 | 7.18 | 0 |
| EXAMPLE 16 | 83.08 | 15.02 | 0 | 0 | 1.90 | 0 |
| EXAMPLE 17 | 79.15 | 15.02 | 3.93 | 0 | 1.90 | 0 |
| EXAMPLE 18 | 69.11 | 15.02 | 13.97 | 0 | 1.90 | 0 |
| EXAMPLE 19 | 80.00 | 1.71 | 8.00 | 0 | 10.30 | 0 |
| EXAMPLE 20 | 80.00 | 10.90 | 8.00 | 0 | 1.14 | 0 |
| EXAMPLE 21 | 75.63 | 7.76 | 7.09 | 3.50 | 0 | 6.03 |
| EXAMPLE 22 | 80.48 | 8.26 | 7.54 | 0 | 3.72 | 0 |
| EXAMPLE 23 | 80.48 | 8.26 | 7.54 | 0 | 3.72 | 0 |
| EXAMPLE 24 | 80.48 | 8.26 | 7.54 | 0 | 3.72 | 0 |
| EXAMPLE 25 | 80.48 | 8.26 | 7.54 | 0 | 3.72 | 0 |
| EXAMPLE 26 | 80.48 | 8.26 | 7.54 | 0 | 3.72 | 0 |
| COMPARATIVE EXAMPLE 1 | 86.80 | 0.30 | 9.49 | 0 | 3.41 | 0 |
| COMPARATIVE EXAMPLE 2 | 77.13 | 8.84 | 0 | 0 | 0 | 5.78 |
| COMPARATIVE EXAMPLE 3 | 40.10 | 0 | 0 | 56.29 | 3.62 | 0 |

# FIG. 3B

| | Al$_2$O$_3$ RATIO [wt%] | Y$_2$O$_3$ RATIO [wt%] | ZrO$_2$ RATIO [wt%] | SiO$_2$ RATIO [wt%] | SiO RATIO [wt%] | TiO RATIO [wt%] |
|---|---|---|---|---|---|---|
| EXAMPLE 1 | 80.77 | 17.78 | 0 | 0 | 1.45 | 0 |
| EXAMPLE 2 | 88.73 | 9.77 | 0 | 0 | 1.51 | 0 |
| EXAMPLE 3 | 92.93 | 5.59 | 0 | 0 | 1.49 | 0 |
| EXAMPLE 4 | 95.61 | 2.86 | 0 | 0 | 1.53 | 0 |
| EXAMPLE 5 | 73.55 | 16.66 | 8.33 | 0 | 1.47 | 0 |
| EXAMPLE 6 | 76.99 | 17.19 | 4.36 | 0 | 1.46 | 0 |
| EXAMPLE 7 | 80.15 | 9.33 | 9.08 | 0 | 1.44 | 0 |
| EXAMPLE 8 | 67.57 | 15.72 | 15.30 | 0 | 1.42 | 0 |
| EXAMPLE 9 | 63.23 | 28.22 | 7.16 | 0 | 1.39 | 0 |
| EXAMPLE 10 | 58.72 | 26.58 | 13.29 | 0 | 1.41 | 0 |
| EXAMPLE 11 | 74.10 | 16.77 | 8.39 | 0 | 0.74 | 0 |
| EXAMPLE 12 | 72.49 | 16.41 | 8.21 | 0 | 2.90 | 0 |
| EXAMPLE 13 | 93.90 | 2.92 | 0 | 0 | 3.18 | 0 |
| EXAMPLE 14 | 89.12 | 2.90 | 4.83 | 0 | 3.16 | 0 |
| EXAMPLE 15 | 77.26 | 2.84 | 16.81 | 0 | 3.09 | 0 |
| EXAMPLE 16 | 70.98 | 28.32 | 0 | 0 | 0.70 | 0 |
| EXAMPLE 17 | 67.16 | 28.12 | 4.03 | 0 | 0.70 | 0 |
| EXAMPLE 18 | 57.61 | 27.63 | 14.07 | 0 | 0.68 | 0 |
| EXAMPLE 19 | 81.72 | 3.85 | 9.87 | 0 | 4.55 | 0 |
| EXAMPLE 20 | 70.05 | 21.06 | 8.46 | 0 | 0.43 | 0 |
| EXAMPLE 21 | 70.57 | 15.98 | 8.00 | 1.92 | 0 | 3.53 |
| EXAMPLE 22 | 73.55 | 16.66 | 8.33 | 0 | 1.47 | 0 |
| EXAMPLE 23 | 73.55 | 16.66 | 8.33 | 0 | 1.47 | 0 |
| EXAMPLE 24 | 73.55 | 16.66 | 8.33 | 0 | 1.47 | 0 |
| EXAMPLE 25 | 73.55 | 16.66 | 8.33 | 0 | 1.47 | 0 |
| EXAMPLE 26 | 73.55 | 16.66 | 8.33 | 0 | 1.47 | 0 |
| COMPARATIVE EXAMPLE 1 | 86.45 | 0.66 | 11.42 | 0 | 1.47 | 0 |
| COMPARATIVE EXAMPLE 2 | 76.93 | 19.46 | 0 | 0 | 0 | 3.61 |
| COMPARATIVE EXAMPLE 3 | 53.59 | 0 | 0 | 44.32 | 2.09 | 0 |

# FIG. 3C

| | Al$_2$O$_3$ PARTICLE SIZE [μm] | Y$_2$O$_3$ PARTICLE SIZE [μm] | YSZ PARTICLE SIZE [μm] | SiO$_2$ PARTICLE SIZE [μm] | SiO PARTICLE SIZE [μm] | TiO PARTICLE SIZE [μm] | ANGLE OF REPOSE [°] |
|---|---|---|---|---|---|---|---|
| EXAMPLE 1 | 20 | 30 | 30 | - | 4 | - | 34.7 |
| EXAMPLE 2 | 20 | 30 | 30 | - | 4 | - | - |
| EXAMPLE 3 | 20 | 30 | 30 | - | 4 | - | - |
| EXAMPLE 4 | 20 | 30 | 30 | - | 4 | - | - |
| EXAMPLE 5 | 20 | 30 | 30 | - | 4 | - | 35.9 |
| EXAMPLE 6 | 20 | 30 | 30 | - | 4 | - | - |
| EXAMPLE 7 | 20 | 30 | 30 | - | 4 | - | - |
| EXAMPLE 8 | 20 | 30 | 30 | - | 4 | - | - |
| EXAMPLE 9 | 20 | 30 | 30 | - | 4 | - | - |
| EXAMPLE 10 | 20 | 30 | 30 | - | 4 | - | - |
| EXAMPLE 11 | 20 | 30 | 30 | - | 4 | - | - |
| EXAMPLE 12 | 20 | 30 | 30 | - | 4 | - | - |
| EXAMPLE 13 | 20 | 30 | 30 | - | 4 | - | - |
| EXAMPLE 14 | 20 | 30 | 30 | - | 4 | - | - |
| EXAMPLE 15 | 20 | 30 | 30 | - | 4 | - | - |
| EXAMPLE 16 | 20 | 30 | 30 | - | 4 | - | - |
| EXAMPLE 17 | 20 | 30 | 30 | - | 4 | - | - |
| EXAMPLE 18 | 20 | 30 | 30 | - | 4 | - | - |
| EXAMPLE 19 | 20 | 30 | 30 | - | 4 | - | - |
| EXAMPLE 20 | 20 | 30 | 30 | - | 4 | - | - |
| EXAMPLE 21 | 30 | 30 | 30 | 28 | - | 5 | - |
| EXAMPLE 22 | 50 | 50 | 50 | - | 10 | - | 26.1 |
| EXAMPLE 23 | 50 | 30 | 30 | - | 4 | - | 32.2 |
| EXAMPLE 24 | 30 | 30 | 30 | - | 4 | - | 35.4 |
| EXAMPLE 25 | 30 | 30 | 30 | - | 6 | - | 30.1 |
| EXAMPLE 26 | 20 | 20 | 20 | - | 1 | - | 39.1 |
| COMPARATIVE EXAMPLE 1 | 20 | - | 30 | - | 4 | - | - |
| COMPARATIVE EXAMPLE 2 | 20 | 30 | - | - | - | 30 | - |
| COMPARATIVE EXAMPLE 3 | 20 | - | - | 28 | 4 | - | - |

# FIG. 3D-1

| | Y / Si | | $Y_2O_3/$ $(SiO+SiO_2)$ | Y / Si | $Al_2O_3 /$ $Y_2O_3$ | Al / Y | $Al_2O_3 /$ $(SiO+SiO_2)$ | Al / Si | $Al_2O_3 /$ $ZrO_2$ | Al / Zr | $Y_2O_3 /$ $ZrO_2$ | Y / Zr | $ZrO_2 /$ $(SiO+SiO_2)$ | Zr / Si |
|---|---|---|---|---|---|---|---|---|---|---|---|---|---|---|
| | Y / (Y+Si) | Si / (Y+Si) | | | | | | | | | | | | |
| | MOLAR PERCENTAGE | MOLAR PERCENTAGE | MOLAR RATIO | ELEMENT RATIO | MOLAR RATIO | ELEMENT RATIO | MOLAR RATIO | ELEMENT RATIO | MOLAR RATIO | ELEMENT RATIO | MOLAR RATIO | ELEMENT RATIO | MOLAR RATIO | ELEMENT RATIO |
| EXAMPLE 1 | 83 / 17 | | 2.39 | 4.79 | 10.03 | 10.03 | 24.01 | 48.01 | - | - | - | - | 0.00 | 0.00 |
| EXAMPLE 2 | 72 / 28 | | 1.27 | 2.54 | 20.05 | 20.05 | 25.43 | 50.86 | - | - | - | - | 0.00 | 0.00 |
| EXAMPLE 3 | 60 / 40 | | 0.74 | 1.47 | 36.71 | 36.71 | 27.00 | 54.01 | - | - | - | - | 0.00 | 0.00 |
| EXAMPLE 4 | 42 / 58 | | 0.37 | 0.73 | 73.78 | 73.78 | 27.04 | 54.08 | - | - | - | - | 0.00 | 0.00 |
| EXAMPLE 5 | 82 / 18 | | 2.22 | 4.44 | 9.74 | 9.74 | 21.63 | 43.27 | 10.67 | 21.35 | 1.10 | 2.19 | 2.03 | 2.03 |
| EXAMPLE 6 | 82 / 18 | | 2.30 | 4.60 | 9.88 | 9.88 | 22.74 | 45.47 | 21.35 | 42.70 | 2.16 | 4.32 | 1.07 | 1.07 |
| EXAMPLE 7 | 72 / 28 | | 1.27 | 2.54 | 18.96 | 18.96 | 24.05 | 48.10 | 10.67 | 21.34 | 0.56 | 1.13 | 2.25 | 2.25 |
| EXAMPLE 8 | 81 / 19 | | 2.17 | 4.34 | 9.48 | 9.48 | 20.59 | 41.19 | 5.34 | 10.67 | 0.56 | 1.13 | 3.86 | 3.86 |
| EXAMPLE 9 | 89 / 11 | | 3.97 | 7.95 | 4.94 | 4.94 | 19.64 | 39.29 | 10.67 | 21.34 | 2.16 | 4.32 | 1.84 | 1.84 |
| EXAMPLE 10 | 88 / 12 | | 3.70 | 7.40 | 4.87 | 4.87 | 18.03 | 36.06 | 5.34 | 10.67 | 1.10 | 2.19 | 3.38 | 3.38 |
| EXAMPLE 11 | 90 / 10 | | 4.43 | 8.85 | 9.75 | 9.75 | 43.16 | 86.33 | 10.68 | 21.36 | 1.10 | 2.19 | 4.04 | 4.04 |
| EXAMPLE 12 | 69 / 31 | | 1.11 | 2.22 | 9.75 | 9.75 | 10.81 | 21.61 | 10.67 | 21.35 | 1.09 | 2.19 | 1.01 | 1.01 |
| EXAMPLE 13 | 26 / 74 | | 0.18 | 0.36 | 70.95 | 70.95 | 12.75 | 25.50 | - | - | - | - | 0.00 | 0.00 |

EP 4 733 287 A1

## FIG. 3D-2

EP 4 733 287 A1

| | Y / Si | | $Y_2O_3/$ $(SiO+SiO_2)$ | Y / Si | $Al_2O_3/$ $Y_2O_3$ | Al / Y | $Al_2O_3/$ $(SiO+SiO_2)$ | Al / Si | $Al_2O_3/$ $ZrO_2$ | Al / Zr | $Y_2O_3/$ $ZrO_2$ | Y / Zr | $ZrO_2/$ $(SiO+SiO_2)$ | Zr / Si |
|---|---|---|---|---|---|---|---|---|---|---|---|---|---|---|
| | Y / (Y+Si) MOLAR PERCENTAGE | Si / (Y+Si) MOLAR PERCENTAGE | MOLAR RATIO | ELEMENT RATIO | MOLAR RATIO | ELEMENT RATIO | MOLAR RATIO | ELEMENT RATIO | MOLAR RATIO | ELEMENT RATIO | MOLAR RATIO | ELEMENT RATIO | MOLAR RATIO | ELEMENT RATIO |
| EXAMPLE 14 | 26 / | 74 | 0.18 | 0.36 | 67.91 | 67.91 | 12.20 | 24.40 | 22.29 | 44.58 | 0.33 | 0.66 | 0.55 | 0.55 |
| EXAMPLE 15 | 26 / | 74 | 0.18 | 0.36 | 60.12 | 60.12 | 10.80 | 21.60 | 5.55 | 11.10 | 0.09 | 0.18 | 1.95 | 1.95 |
| EXAMPLE 16 | 94 / | 6 | 7.91 | 15.81 | 5.53 | 5.53 | 43.73 | 87.45 | - | - | - | - | 0.00 | 0.00 |
| EXAMPLE 17 | 94 / | 6 | 7.91 | 15.81 | 5.27 | 5.27 | 41.66 | 83.32 | 20.14 | 40.28 | 3.82 | 7.64 | 2.07 | 2.07 |
| EXAMPLE 18 | 94 / | 6 | 7.91 | 15.81 | 4.60 | 4.60 | 36.37 | 72.75 | 4.95 | 9.89 | 1.08 | 2.15 | 7.35 | 7.35 |
| EXAMPLE 19 | 25 / | 75 | 0.17 | 0.33 | 46.78 | 46.78 | 7.77 | 15.53 | 10.00 | 20.00 | 0.21 | 0.43 | 0.78 | 0.78 |
| EXAMPLE 20 | 95 / | 5 | 9.56 | 19.12 | 7.34 | 7.34 | 70.18 | 140.35 | 10.00 | 20.00 | 1.36 | 2.73 | 7.02 | 7.02 |
| EXAMPLE 21 | 82 / | 18 | 2.22 | 4.43 | 9.74 | 9.74 | 21.61 | 43.21 | 10.67 | 21.33 | 1.09 | 2.19 | 2.03 | 2.03 |
| EXAMPLE 22 | 82 / | 18 | 2.22 | 4.44 | 9.74 | 9.74 | 21.63 | 43.27 | 10.67 | 21.35 | 1.10 | 2.19 | 2.03 | 2.03 |
| EXAMPLE 23 | 82 / | 18 | 2.22 | 4.44 | 9.74 | 9.74 | 21.63 | 43.27 | 10.67 | 21.35 | 1.10 | 2.19 | 2.03 | 2.03 |
| EXAMPLE 24 | 82 / | 18 | 2.22 | 4.44 | 9.74 | 9.74 | 21.63 | 43.27 | 10.67 | 21.35 | 1.10 | 2.19 | 2.03 | 2.03 |
| EXAMPLE 25 | 82 / | 18 | 2.22 | 4.44 | 9.74 | 9.74 | 21.63 | 43.27 | 10.67 | 21.35 | 1.10 | 2.19 | 2.03 | 2.03 |
| EXAMPLE 26 | 82 / | 18 | 2.22 | 4.44 | 9.74 | 9.74 | 21.63 | 43.27 | 10.67 | 21.35 | 1.10 | 2.19 | 2.03 | 2.03 |
| COMPARATIVE EXAMPLE 1 | 15 / | 85 | 0.09 | 0.18 | 289.33 | 289.33 | 25.45 | 50.91 | 9.15 | 18.29 | 0.03 | 0.06 | 2.78 | 2.78 |
| COMPARATIVE EXAMPLE 2 | 100 / | 0 | - | - | 8.73 | 8.73 | - | - | - | - | - | - | - | - |
| COMPARATIVE EXAMPLE 3 | 0 / | 100 | 0.00 | 0.00 | - | - | 11.08 | 22.15 | - | - | - | - | - | - |

## FIG. 3E

| | FIRING TEMPERATURE | FIRING TIME | DENSITY | RELATIVE DENSITY | THREE-POINT FLEXURAL STRENGTH | STRENGTH/ DENSITY | CRACK | ALKALI DISSOLUTION |
|---|---|---|---|---|---|---|---|---|
| | [°C] | [min] | [g/cm$^3$] | [%] | [MPa] | [MPa·cm$^3$/g] | SELF-HEALING PROPERTY | MASS LOSS [g/m$^2$] |
| EXAMPLE 1 | 1700 | 20 | 3.77 | 91.5 | 173 | 46 | ○ | 3.2 |
| EXAMPLE 2 | 1700 | 20 | 3.85 | 95.6 | 196 | 51 | ○ | - |
| EXAMPLE 3 | 1700 | 20 | 3.81 | 95.8 | 181 | 48 | ○ | - |
| EXAMPLE 4 | 1700 | 20 | 3.76 | 94.9 | 152 | 40 | ○ | - |
| EXAMPLE 5 | 1700 | 20 | 3.99 | 93.6 | 219 | 55 | ○ | 3.4 |
| EXAMPLE 6 | 1700 | 20 | 3.92 | 93.4 | 194 | 49 | ○ | - |
| EXAMPLE 7 | 1700 | 20 | 3.89 | 92.7 | 201 | 52 | ○ | - |
| EXAMPLE 8 | 1700 | 20 | 4.19 | 95.7 | 250 | 60 | ○ | - |
| EXAMPLE 9 | 1700 | 20 | 4.17 | 95.7 | 178 | 43 | ○ | - |
| EXAMPLE 10 | 1700 | 20 | 4.14 | 93 | 186 | 45 | ○ | - |
| EXAMPLE 11 | 1700 | 20 | 4 | 93.6 | 160 | 40 | ○ | - |
| EXAMPLE 12 | 1700 | 20 | 3.82 | 90.4 | 178 | 47 | ○ | - |
| EXAMPLE 22 | 1700 | 20 | 3.93 | 92.3 | 163 | 41 | ○ | - |
| EXAMPLE 23 | 1700 | 20 | 3.88 | 90.9 | 172 | 44 | ○ | - |
| EXAMPLE 24 | 1700 | 20 | 3.86 | 90.5 | 216 | 56 | ○ | - |
| EXAMPLE 25 | 1700 | 20 | 3.84 | 90.1 | 196 | 51 | ○ | - |
| EXAMPLE 26 | 1700 | 20 | 3.95 | 92.7 | 224 | 57 | ○ | - |
| COMPARATIVE EXAMPLE 1 | 1700 | 20 | 3.95 | 94.3 | 61 | 15 | × | - |
| COMPARATIVE EXAMPLE 2 | 1700 | 20 | 3.84 | 92.8 | 64 | 17 | × | - |
| COMPARATIVE EXAMPLE 3 | 1690 | 20 | - | - | 103 | - | ○ | 430 |

EP 4 733 287 A1

# FIG. 4A

SEM

OXIDE MAINLY
CONTAINING Y AND Si →

OXIDE MAINLY
CONTAINING Y AND Al →

OXIDE MAINLY
CONTAINING Al →

EDX_Al

EDX_Y

EDX_Si

EDX_O

FIG. 4B

SEM

OXIDE MAINLY
CONTAINING Y AND Al

OXIDE MAINLY CONTAINING
Y AND Si

OXIDE MAINLY CONTAINING Al

OXIDE MAINLY CONTAINING
Y AND Zr

EDX_Al

EDX_Y

EDX_Zr

EDX_Si

EDX_O

Europäisches
Patentamt

European
Patent Office

Office européen
des brevets

# EUROPEAN SEARCH REPORT

**Application Number**

EP 25 21 0693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/085384 A1 (CANON KK [JP]) 19 May 2023 (2023-05-19) | 1-11, 13-25 | INV. C04B35/117 |
| Y | * paragraphs [0006], [0007], [0011], [0080] - [0082]; example 21; tables * | 12 | C04B35/653 C04B35/111 |
| | ----- | | |
| Y | EP 3 159 141 A1 (FUJIMI INC [JP]) 26 April 2017 (2017-04-26) * paragraphs [0076], [0077] * | 12 | |
| | ----- | | |

**TECHNICAL FIELDS SEARCHED (IPC)**

C04B

The present search report has been drawn up for all claims

| Place of search | Date of completion of the search | Examiner |
|---|---|---|
| Munich | 9 March 2026 | Bonneau, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 4 733 287 A1

## ANNEX TO THE EUROPEAN SEARCH REPORT
## ON EUROPEAN PATENT APPLICATION NO.

EP 25 21 0693

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2026

| Patent document cited in search report | | Publication date | Patent family member(s) | | Publication date |
|---|---|---|---|---|---|
| WO 2023085384 | A1 | 19-05-2023 | CN | 118215563 A | 18-06-2024 |
| | | | DE | 112022004906 T5 | 14-08-2024 |
| | | | JP | 2023072375 A | 24-05-2023 |
| | | | US | 20260022073 A1 | 22-01-2026 |
| | | | WO | 2023085384 A1 | 19-05-2023 |
| EP 3159141 | A1 | 26-04-2017 | CN | 106457668 A | 22-02-2017 |
| | | | CN | 111251604 A | 09-06-2020 |
| | | | EP | 3159141 A1 | 26-04-2017 |
| | | | JP | 6193493 B2 | 06-09-2017 |
| | | | JP | 6562977 B2 | 21-08-2019 |
| | | | JP | 6633677 B2 | 22-01-2020 |
| | | | JP | 2017214658 A | 07-12-2017 |
| | | | JP | 2018154925 A | 04-10-2018 |
| | | | JP | WO2015194678 A1 | 15-06-2017 |
| | | | US | 2017189960 A1 | 06-07-2017 |
| | | | WO | 2015194678 A1 | 23-12-2015 |

EPO FORM P0459

For more details about this annex : see Official Journal of the European Patent Office, No. 12/82

**EP 4 733 287 A1**

**REFERENCES CITED IN THE DESCRIPTION**

**Patent documents cited in the description**

- JP 2019019051 A
- JP 2023072682 A